# EUROPEAN PATENT APPLICATION

(11) **EP 4 274 301 A1**
(43) Date of publication of application: **08.11.2023**
(21) Application number: 21923929.0
(22) Date of filing: 12.03.2021
(51) Int. Cl.: H04W 36/00, H04W 4/06

(54) **COMMUNICATION METHOD AND APPARATUS**

(30) Priority: 07.02.2021 WO PCT/CN2021/075875
(71) Applicant: Huawei Technologies Co., Ltd., Shenzhen, Guangdong 518129 (CN)
(72) Inventor: ZONG, Zaifeng, Shenzhen, Guangdong 518129 (CN); ZHU, Fenqin, Shenzhen, Guangdong 518129 (CN)
(74) Representative: Gill Jennings & Every LLP
(86) International application number: PCT/CN2021/080633
(87) International publication number: WO 2022/165919

(57) **Abstract**

This application relates to the field of communication technologies, and discloses a communication method and apparatus. The method includes: A first communication apparatus obtains service area information of a first service, where the service area information indicates a service area that supports transmission of the first service in a first transmission manner in a first network; and sends first information if a target cell of a terminal device is not in the service area, where the first information is for establishing a first transmission path, and the first transmission path is for sending data of the first service to the terminal device in a second transmission manner in the first network; or skips sending first information if a target cell is in the service area. According to the foregoing method, the first communication apparatus may determine, based on the service area information of the first service, whether the target cell is in the service area, and then perform different processing based on whether the target cell is in the service area, to facilitate sending of the data of the first service to the terminal device in an appropriate manner.

## Description

### CROSS-REFERENCE TO RELATED APPLICATIONS

This application claims priority to Chinese Patent Application No. PCT/CN2021/075875, filed with the China National Intellectual Property Administration on February 7, 2021 and entitled "COMMUNICATION METHOD AND APPARATUS", which is incorporated herein by reference in its entirety.

### TECHNICAL FIELD

This application relates to the field of wireless communication technologies, and in particular, to a communication method and apparatus.

### BACKGROUND

With development of the mobile Internet, multicast/broadcast services are widely applied, for example, applied to fields such as a high-definition video, autonomous driving, an Internet of Things device, and a public security warning.

To meet a transmission requirement of the multicast/broadcast service, a multi-cast transmission manner, that is, an evolved multimedia broadcast multicast service (evolved multimedia broadcast multicast service, eMBMS) transmission manner is introduced into a 4th generation (4th generation, 4G) network. In this case, a first service is used as an example. The first service may be a multicast/broadcast service, and in the 4G network, data of the first service may be transmitted in the eMBMS transmission manner. A multi-cast transmission manner, that is, a multicast broadcast service (multicast broadcast service, MBS) transmission manner is also introduced into a 5th generation (5th generation, 5G) network. In this case, the first service is still used as an example. In the 5G network, the data of the first service may be transmitted in a 5G MBS transmission manner.

However, in a scenario in which the 4G network and the 5G network coexist, after a terminal device moves from the 5G network to the 4G network or moves from the 4G network to the 5G network, how to send the data of the first service to the terminal device still needs to be further studied.

### SUMMARY

This application provides a communication method and apparatus, to send data of a first service to a terminal device after the terminal device moves from a second network to a first network or moves from a first network to a second network.

According to a first aspect, an embodiment of this application provides a communication method. The method is applied in a scenario that a terminal device moves from a second network to a first network. The method is used to implement a function on a core network element side. For example, the method may be applied to a session management network element or a chip in a session management network element. A specific execution entity of the method is not limited in this embodiment of this application. That the method is applied to a session management network element is used as an example. The session management network element obtains service area information of a first service, where the service area information indicates a service area that supports transmission of the first service in a first transmission manner in the first network; and sends first information if a target cell of the terminal device is not in the service area, where the first information is for establishing a first transmission path, and the first transmission path is for sending data of the first service to the terminal device in a second transmission manner in the first network; or skips sending first information if a target cell is in the service area, where the target cell is in the first network.

According to the foregoing method, the session management network element may determine, based on the service area information of the first service, whether the target cell is in the service area, and then perform different processing based on whether the target cell is in the service area, to facilitate sending of the data of the first service to the terminal device in an appropriate manner. For example, if the target cell is not in the service area, the first information may be sent, and then an AS may send the data of the first service to the terminal device in the second transmission manner in the first network; or if the target cell is in the service area, the first information may not be sent, and the AS may send the data of the first service to the terminal device in the first transmission manner (that is, an eMBMS transmission manner) in the first network.

In a possible design, the service area information includes at least one of the following: an identifier of a public land mobile network PLMN corresponding to the service area; a tracking area identifier TAI corresponding to the service area; and an identifier of a cell corresponding to the service area.

In a possible design, the obtaining service area information of a first service includes: receiving the service area information from a first core network element, where the first core network element includes any one of the following: a multi-cast service network element, a multi-cast session management network element, a network exposure function network element, a policy control network element, a unified data storage network element, and a unified data management network element; or receiving the service area information from the terminal device.

In a possible design, the receiving the service area information from the terminal device includes: receiving a first message from the terminal device, where the first message includes the service area information, and the first message is a PDU session establishment request message or a PDU session modification request message.

In a possible design, the first message further includes a join request, and the join request is used to request to send the data of the first service to the terminal device in a third transmission manner in the second network.

In a possible design, the method further includes: obtaining information about the target cell; and determining, based on the information about the target cell, whether the target cell is in the service area.

In a possible design, the information about the target cell includes a TAI corresponding to the target cell and/or an identifier of the target cell.

In a possible design, the obtaining information about the target cell includes: receiving the information about the target cell from a mobility management network element.

In a possible design, the information about the target cell is carried in a session context request message from the mobility management network element, the session context request message is used to request a context of a first PDU session of the terminal device, and the first PDU session is associated with the first service.

In a possible design, the method further includes: determining, if the session context request message does not carry the information about the target cell, that the target cell is not in the service area.

In a possible design, the sending first information includes: receiving the session context request message from the mobility management network element, where the session context request message is used to request the context of the first PDU session of the terminal device, and the first PDU session is associated with the first service; and sending the context of the first PDU session to the mobility management network element based on the session context request message, where the context of the first PDU session includes the first information.

In a possible design, the skipping sending first information includes: receiving the session context request message from the mobility management network element, where the session context request message is used to request the context of the first PDU session of the terminal device, and the first PDU session is associated with the first service; and sending the context of the first PDU session to the mobility management network element based on the session context request message, where the context of the first PDU session does not include the first information.

In a possible design, if the target cell of the terminal device is in the service area, the method further includes: releasing a resource that is in the second network and that is for sending the first service to the terminal device.

According to a second aspect, an embodiment of this application provides a communication method. The method is applied in a scenario that a terminal device moves from a second network to a first network. The method is used to implement a function on a core network element side. For example, the method may be applied to a mobility management network element or a chip in a mobility management network element. A specific execution entity of the method is not limited in this embodiment of this application. That the method is applied to a mobility management network element is used as an example. The mobility management network element obtains service area information of a first service, where the service area information indicates a service area that supports transmission of the first service in a first transmission manner in the first network; and sends first information if a target cell of the terminal device is not in the service area, where the first information is for establishing a first transmission path, and the first transmission path is for sending data of the first service to the terminal device in a second transmission manner in the first network; or skips sending first information if a target cell is in the service area, where the target cell is in the first network.

According to the foregoing method, the mobility management network element may determine, based on the service area information of the first service, whether the target cell is in the service area, and then perform different processing based on whether the target cell is in the service area, to facilitate sending of the data of the first service to the terminal device in an appropriate manner. For example, if the target cell is not in the service area, the first information may be sent, and then an AS may send the data of the first service to the terminal device in the second transmission manner in the first network; or if the target cell is in the service area, the first information may not be sent, and the AS may send the data of the first service to the terminal device in the first transmission manner (that is, an eMBMS transmission manner) in the first network.

In a possible design, the service area information includes at least one of the following: an identifier of a PLMN corresponding to the service area; a TAI corresponding to the service area; and an identifier of a cell corresponding to the service area.

In a possible design, the obtaining service area information of a first service includes: receiving the service area information from a second core network element, where the second core network element includes any one of the following: a session management network element, a multi-cast service network element, a multi-cast session management network element, a network exposure function network element, a unified data storage network element, or a unified data management network element.

In a possible design, the method further includes: obtaining information about the target cell; and determining, based on the information about the target cell, whether the target cell is in the service area.

In a possible design, the information about the target cell includes a TAI corresponding to the target cell and/or an identifier of the target cell.

In a possible design, the obtaining information about the target cell includes: receiving the information about the target cell from a source access network element of the terminal device, where the source access network element is in the second network.

In a possible design, the method further includes: receiving the first information from the session management network element.

In a possible design, the method further includes: sending a second message to the session management network element, where the second message is for obtaining the first information.

In a possible design, the second message includes second information, and the second information indicates to send the data of the first service to the terminal device in the second transmission manner in the first network.

In a possible design, the second message is a session context request message, where the session context request message is used to request a context of a first PDU session of the terminal device, and the first PDU session is associated with the first service.

In a possible design, the method further includes: determining the first PDU session associated with the first service.

In a possible design, the determining the first PDU session associated with the first service includes: determining, based on S-NSSAI and/or a DNN of the first service, that a PDU session corresponding to the S-NSSAI and/or the DNN is the first PDU session associated with the first service; or receiving an identifier of the first service from the session management network element by using the first PDU session, and establishing an association relationship between the first service and the first PDU session; and determining, based on the association relationship, the first PDU session associated with the first service.

In a possible design, if the target cell is in the service area, the method further includes: sending third information to a source access network element of the terminal device, where the third information is used to redirect the terminal device to the target cell, and the source access network element is in the second network.

According to a third aspect, an embodiment of this application provides a communication method. The method is applied in a scenario that a terminal device moves from a second network to a first network. The method is used to implement a function on an access network element side. For example, the method may be applied to an access network element or a chip in an access network element. A specific execution entity of the method is not limited in this embodiment of this application. That the method is applied to an access network element is used as an example. The access network element obtains service area information of a first service, where the service area information indicates a service area that supports transmission of the first service in a first transmission manner in the first network; and sends fourth information if a target cell of the terminal device is not in the service area, where the fourth information indicates to allocate a radio resource to the first service in the first network, and the radio resource is used to send data of the first service to the terminal device in a second transmission manner in the first network; or if the target cell is in the service area, redirects the terminal device to the target cell, or sends fifth information, where the fifth information indicates not to allocate the radio resource to the first service in the first network, where the target cell is in the first network.

According to the foregoing method, the source access network element may determine, based on the service area information of the first service, whether the target cell is in the service area, and then perform different processing based on whether the target cell is in the service area, to facilitate sending of the data of the first service to the terminal device in an appropriate manner.

In a possible design, the service area information includes at least one of the following: an identifier of a PLMN corresponding to the service area; a TAI corresponding to the service area; and an identifier of a cell corresponding to the service area.

In a possible design, the obtaining service area information of a first service includes: receiving the service area information from a third core network element, where the third core network element includes any one of the following: a session management network element, a mobility management network element, and a multi-cast session management network element; or receiving the service area information from the terminal device.

In a possible design, the receiving the service area information from the terminal device includes: receiving an RRC message from the terminal device, where the RRC message includes the service area information.

According to a fourth aspect, an embodiment of this application provides a communication method. The method is applied in a scenario that a terminal device moves from a second network to a first network. The method is used to implement a function on a core network element side. For example, the method may be applied to a mobility management network element or a chip in a mobility management network element. A specific execution entity of the method is not limited in this embodiment of this application. That the method is applied to a mobility management network element is used as an example. The mobility management network element obtains information about a target cell of the terminal device, where the target cell is located in the first network; and sends the information about the target cell to a session management network element.

In a possible design, the information about the target cell includes a TAI corresponding to the target cell and/or an identifier of the target cell.

In a possible design, the sending the information about the target cell to a session management network element includes: determining that the terminal device joins a multi-cast session of a first service, or determining that the terminal device receives data of the first service in a third transmission manner; and sending a session context request message to the session management network element, where the session context request message includes the information about the target cell, where the session context request message is used to request a context of a first PDU session of the terminal device, and the first PDU session is associated with the first service.

In a possible design, the method further includes: determining the first PDU session associated with the first service.

In a possible design, the determining the first PDU session associated with the first service includes: determining, based on S-NSSAI and/or a DNN of the first service, that a PDU session corresponding to the S-NSSAI and/or the DNN is the first PDU session associated with the first service; or receiving an identifier of the first service from the session management network element by using the first PDU session, and establish an association relationship between the first service and the first PDU session; and determining, based on the association relationship, the first PDU session associated with the first service.

In a possible design, the method further includes: determining that the first service supports transmission through the first network.

According to a fifth aspect, an embodiment of this application provides a communication method. The method is applied in a scenario that a terminal device moves from a second network to a first network. The method is used to implement a function on a core network element side. For example, the method may be applied to a session management network element or a chip in a session management network element. A specific execution entity of the method is not limited in this embodiment of this application. That the method is applied to a session management network element is used as an example. The session management network element receives second information or fourth information, where the second information indicates to send data of a first service to the terminal device in a second transmission manner in the first network, the fourth information indicates to allocate a radio resource to the first service in the first network, and the radio resource is used to send the data of the first service to the terminal device in the second transmission manner in the first network; and sends first information based on the second information or the fourth information, where the first information is for establishing a first transmission path, and the first transmission path is for sending the data of the first service to the terminal device in the second transmission manner in the first network.

In a possible design, the method further includes: sending service area information of the first service to a mobility management network element or a source access network element of the terminal device, where the service area information indicates a service area that supports transmission of the first service in a first transmission manner in the first network, and the source access network element is in the second network.

In a possible design, the method further includes: sending an identifier of the first service to the mobility management network element by using a first PDU session of the terminal device, where the first PDU session is associated with the first service.

In a possible design, the method further includes: indicating a user plane network element to send the data of the first service to the terminal device through a transmission path corresponding to the second transmission manner.

According to a sixth aspect, an embodiment of this application provides a communication method. The method is applied in a scenario that a terminal device moves from a second network to a first network. The method is used to implement a function on a core network element side. For example, the method may be applied to a mobility management network element or a chip in a mobility management network element. A specific execution entity of the method is not limited in this embodiment of this application. That the method is applied to a mobility management network element is used as an example. The mobility management network element receives fourth information from a source access network element of the terminal device, where the fourth information indicates to allocate a radio resource to a first service in the first network, and the radio resource is used to send data of the first service to the terminal device in a second transmission manner in the first network; and sends second information or the fourth information to a session management network element, where the second information is obtained based on the fourth information, and the second information indicates to send the data of the first service to the terminal device in the second transmission manner in the first network.

It is to be noted that, the methods described in the fourth aspect to the sixth aspect correspond to the methods described in the first aspect to the third aspect. For beneficial effects of related technical features in the described methods, reference may be made to each other. Details are not described herein again.

According to a seventh aspect, an embodiment of this application provides a communication method. The method is used to implement a function on a terminal side. For example, the method may be applied to a terminal device or a chip in a terminal device. A specific execution entity of the method is not limited in this embodiment of this application. That the method is applied to a terminal device is used as an example. The terminal device obtains sixth information, where the sixth information indicates a second network to support sending of data of a first service in a third transmission manner; and sends a join request to a network element in the second network based on the sixth information, where the join request is used to request to send the data of the first service to a terminal device in the third transmission manner in the second network.

By using the foregoing method, the terminal device may determine, based on the sixth information, whether a network accessed by the terminal device supports sending the data of the first service in the third transmission manner. If the network supports sending the data of the first service in the third transmission manner, the terminal device may send a join request to join a multi-cast session of the first service; or if the network does not support sending of the data of the first service in the third transmission manner, the terminal device may skip sending a join request, so that after accessing the second network, the terminal device may determine, based on the foregoing determining, whether to send the join request, to receive the data of the first service in an appropriate manner.

In a possible design, the sixth information includes identifiers of one or more networks, the one or more networks include the second network, and the one or more networks support sending of the data of the first service in the third transmission manner.

In a possible design, the identifiers of the one or more networks are identifiers of one or more PLMNs.

In a possible design, the sixth information further includes a DNN and/or S-NSSAI corresponding to the second network.

In a possible design, the method further includes: Sending the join request to the network element in the second network by using a first PDU session of the terminal device, where a DNN and/or S-NSSAI corresponding to the first PDU session are/is the same as the DNN and/or the S-NSSAI corresponding to the second network.

In a possible design, the obtaining sixth information of a first service of the terminal device includes: receiving the sixth information from an application server; or Receiving the sixth information from a multi-cast service network element.

According to an eighth aspect, an embodiment of this application provides a communication method. The method is used to implement a function on an application server side. For example, the method may be applied to an application server or a chip in an application server. A specific execution entity of the method is not limited in this embodiment of this application. That the method is applied to an application server is used as an example. The application server receives a first notification message, where the first notification message notifies a terminal device to access a second network, where the second network supports sending data of a first service in a third transmission manner; and Sends seventh information based on the first notification message, where the seventh information indicates to send the data of the first service to the terminal device in the third transmission manner in the second network.

By using the foregoing method, after the application server learns that the terminal device accesses the second network, when the second network supports sending the data of the first service in the third transmission manner, the application server may indicate to join the terminal device to a multi-cast session of the first service. Optionally, when the second network does not support sending of the data of the first service in the third transmission manner, the application server may not indicate to join the terminal device to the multi-cast session of the first service. In this way, after accessing the second network, the terminal device may send the data of the first service to the terminal device in an appropriate manner.

In a possible design, the first notification message includes an identifier of the second network. The method further includes: The application server determines, based on the identifier of the second network, whether sending of the data of the first service in the third transmission manner through the second network is supported.

In a possible design, that the application server receives a first notification message includes: The application server receives the first notification message from a fourth core network element.

In a possible design, that the application server sends seventh information includes: The application server sends the seventh information to a fifth core network element.

In a possible design, the method further includes: sending a first subscription request, where the first subscription request is used to request to send the first notification message after the terminal device accesses the second network.

In a possible design, the sending seventh information includes: sending the seventh information by using an application policy session corresponding to a first session, where the first session is a PDU session or a PDN connection that is of the terminal device and that is associated with the first service.

In a possible design, the seventh information includes an identifier corresponding to the first service transmitted in the third transmission manner.

According to a ninth aspect, an embodiment of this application provides a communication method. The method is used to implement a function on an application server side. For example, the method may be applied to an application server or a chip in an application server. A specific execution entity of the method is not limited in this embodiment of this application. That the method is applied to an application server is used as an example. The application server receives a second notification message, where the second notification message indicates the terminal device to access a first network; and sends eighth information based on the second notification message, where the eighth information is for establishing a second transmission path, and the second transmission path is for sending data of a first service to the terminal device in a fifth transmission manner in the first network; or sends request information based on the second notification message, where the request information requests to establish a third transmission path, and the third transmission path is for sending the data of the first service to the terminal device in a first transmission manner in the first network.

By using the foregoing method, the application server learns, based on the second notification message, that the terminal device accesses the first network, and may further send the data of the first service to the terminal device through a transmission path corresponding to the fifth transmission manner or the first transmission manner.

In a possible design, that the application server receives a second notification message includes: The application server receives the second notification message from a sixth core network element.

In a possible design, that the application server sends eighth information includes: The application server sends the eighth information to a seventh core network element.

In a possible design, the method further includes: sending the data of the first service to the terminal device through the second transmission path, where a destination address of the data of the first service is an IP address of the terminal device.

In a possible design, the method further includes: sending a second subscription request, where the second subscription request is used to request to send the second notification message after the terminal device accesses the first network.

In a possible design, the second subscription request includes ninth information, and the ninth information indicates to send the second notification message when sending of the data of the first service in the first transmission manner is not supported at the location where the terminal device is accessed.

In a possible design, the second subscription request includes service area information of the first service, where the service area information indicates a service area that supports transmission of the first service in the first transmission manner in the first network, and the service area information determines whether the sending of the data of the first service in the first transmission manner is supported at the location where the terminal device is accessed.

In a possible design, the location where the terminal device is accessed includes a cell and/or a tracking area in the first network accessed by the terminal device.

In a possible design, that the application server sends eighth information based on the second notification message or sends request information based on the second notification message includes: The application server determines that the sending of the data of the first service in the first transmission manner through the first network is not supported at the location where the terminal device is accessed. The application server sends the eighth information or the application server sends the request information.

In a possible design, the second notification message includes access location information of the terminal device, and the access location information of the terminal device indicates a location where the terminal device is accessed. The method further includes: determining, based on the location information, that the sending of the data of the first service in the first transmission manner through the first network is not supported at the location where the terminal device is accessed.

In a possible design, the request information includes new service area information of the first service, where the new service area information of the first service indicates a new service area of the first service, and the new service area includes the location where the terminal device is accessed.

In a possible design, the access location information of the terminal device includes information about the cell in the first network accessed by the terminal device, and/or a tracking area identifier in the first network accessed by the terminal device.

According to a tenth aspect, an embodiment of this application provides a communication apparatus. The communication apparatus may be a core network element (for example, a session management network element or a mobility management network element) or a chip disposed in a core network element. The communication apparatus has functions of implementing any one of the first aspect, the second aspect, and the fourth aspect to the sixth aspect. For example, the communication apparatus includes corresponding modules, units, or means (means) that perform steps in any one of the first aspect to the sixth aspect. The functions, units, or means may be implemented by software, or may be implemented by hardware, or may be implemented by executing corresponding software by hardware.

In a possible design, the communication apparatus includes a processing unit and a communication unit. The communication unit may be configured to receive and send a signal, to implement communication between the communication apparatus and another apparatus. The processing unit may be configured to perform some internal operations of the communication apparatus.

In another possible design, the communication apparatus includes a processor, and may further include a transceiver, where the transceiver is configured to receive and send a signal, and the processor executes program instructions to complete the method in any possible design or implementation of the first aspect, the second aspect, and the fourth aspect to the sixth aspect. The communication apparatus may further include one or more memories. The memory may be coupled to the processor, and the memory may store a necessary computer program or instruction for implementing the function in any one of the first aspect, the second aspect, and the fourth aspect to the sixth aspect. The processor may execute the computer program or instruction stored in the memory. When the computer program or instruction is executed, the communication apparatus is enabled to implement the method in any possible design or implementation of the first aspect, the second aspect, and the fourth aspect to the sixth aspect.

In still another possible design, the communication apparatus includes a processor, and the processor may be configured to be coupled to a memory. The memory may store a necessary computer program or instruction for implementing the function in any one of the first aspect, the second aspect, and the fourth aspect to the sixth aspect. The processor may execute the computer program or instruction stored in the memory. When the computer program or instruction is executed, the communication apparatus is enabled to implement the method in any possible design or implementation of the first aspect, the second aspect, and the fourth aspect to the sixth aspect.

In still yet another possible design, the communication apparatus includes a processor and an interface circuit. The processor is configured to communicate with another apparatus by using the interface circuit, and perform the method in any possible design or implementation of the first aspect, the second aspect, and the fourth aspect to the sixth aspect.

According to an eleventh aspect, an embodiment of this application provides a communication apparatus. The communication apparatus may be an access network element or a chip disposed in an access network element. The communication apparatus has a function of implementing the third aspect. For example, the communication apparatus includes corresponding modules, units, or means that perform steps in the third aspect. The functions, units, or means may be implemented by software, or may be implemented by hardware, or may be implemented by executing corresponding software by hardware.

In a possible design, the communication apparatus includes a processing unit and a communication unit. The communication unit may be configured to receive and send a signal, to implement communication between the communication apparatus and another apparatus. The processing unit may be configured to perform some internal operations of the communication apparatus.

In another possible design, the communication apparatus includes a processor, and may further include a transceiver, where the transceiver is configured to receive and send a signal, and the processor executes program instructions to complete the method in any possible design or implementation of the third aspect. The communication apparatus may further include one or more memories. The memory may be coupled to the processor, and the memory may store a necessary computer program or instruction for implementing the function in the third aspect. The processor may execute the computer program or instruction stored in the memory. When the computer program or instruction is executed, the communication apparatus is enabled to implement the method in any possible design or implementation of the third aspect.

In still another possible design, the communication apparatus includes a processor, and the processor may be configured to be coupled to a memory. The memory may store a necessary computer program or instruction for implementing the function in the third aspect. The processor may execute the computer program or instruction stored in the memory. When the computer program or instruction is executed, the communication apparatus is enabled to implement the method in any possible design or implementation of the third aspect.

In still yet another possible design, the communication apparatus includes a processor and an interface circuit. The processor is configured to communicate with another apparatus by using the interface circuit, and perform the method in any possible design or implementation of the third aspect.

According to a twelfth aspect, an embodiment of this application provides a communication apparatus. The communication apparatus may be a terminal device or a chip disposed in a terminal device. The communication apparatus has a function of implementing the seventh aspect. For example, the communication apparatus includes corresponding modules, units, or means that perform steps in the seventh aspect. The functions, units, or means may be implemented by software, or may be implemented by hardware, or may be implemented by executing corresponding software by hardware.

In a possible design, the communication apparatus includes a processing unit and a communication unit. The communication unit may be configured to receive and send a signal, to implement communication between the communication apparatus and another apparatus. The processing unit may be configured to perform some internal operations of the communication apparatus.

In another possible design, the communication apparatus includes a processor, and may further include a transceiver, where the transceiver is configured to receive and send a signal, and the processor executes program instructions to complete the method in any possible design or implementation of the seventh aspect. The communication apparatus may further include one or more memories. The memory may be coupled to the processor, and the memory may store a necessary computer program or instruction for implementing the function in the seventh aspect. The processor may execute the computer program or instruction stored in the memory. When the computer program or instruction is executed, the communication apparatus is enabled to implement the method in any possible design or implementation of the seventh aspect.

In still another possible design, the communication apparatus includes a processor, and the processor may be configured to be coupled to a memory. The memory may store a necessary computer program or instruction for implementing the function in the seventh aspect. The processor may execute the computer program or instruction stored in the memory. When the computer program or instruction is executed, the communication apparatus is enabled to implement the method in any possible design or implementation of the seventh aspect.

In still yet another possible design, the communication apparatus includes a processor and an interface circuit. The processor is configured to communicate with another apparatus by using the interface circuit, and perform the method in any possible design or implementation of the seventh aspect.

According to a thirteenth aspect, an embodiment of this application provides a communication apparatus. The communication apparatus may be an application server or a chip disposed in an application server. The communication apparatus has a function of implementing the eighth aspect or the ninth aspect. For example, the communication apparatus includes corresponding modules, units, or means that perform steps in the eighth aspect or the ninth aspect. The functions, units, or means may be implemented by software, or may be implemented by hardware, or may be implemented by executing corresponding software by hardware.

In a possible design, the communication apparatus includes a processing unit and a communication unit. The communication unit may be configured to receive and send a signal, to implement communication between the communication apparatus and another apparatus. The processing unit may be configured to perform some internal operations of the communication apparatus.

In another possible design, the communication apparatus includes a processor, and may further include a transceiver, where the transceiver is configured to receive and send a signal, and the processor executes program instructions to complete the method in any possible design or implementation of the eighth aspect or the ninth aspect. The communication apparatus may further include one or more memories. The memory may be coupled to the processor, and the memory may store a necessary computer program or instruction for implementing the function in the eighth aspect or the ninth aspect. The processor may execute the computer program or instruction stored in the memory. When the computer program or instruction is executed, the communication apparatus is enabled to implement the method in any possible design or implementation of the eighth aspect or the ninth aspect.

In still another possible design, the communication apparatus includes a processor, and the processor may be configured to be coupled to a memory. The memory may store a necessary computer program or instruction for implementing the function in the eighth aspect or the ninth aspect. The processor may execute the computer program or instruction stored in the memory. When the computer program or instruction is executed, the communication apparatus is enabled to implement the method in any possible design or implementation of the eighth aspect or the ninth aspect.

In still yet another possible design, the communication apparatus includes a processor and an interface circuit. The processor is configured to communicate with another apparatus by using the interface circuit, and perform the method in any possible design or implementation of the eighth aspect or the ninth aspect.

It may be understood that in the tenth, eleventh, twelfth, and thirteenth aspects, the processor may be implemented by hardware, or may be implemented by software. When the processor is implemented by hardware, the processor may be a logic circuit, an integrated circuit, or the like. When being implemented by software, the processor may be a general-purpose processor, and is implemented by reading software code stored in the memory. In addition, there may be one or more processors, and there may be one or more memories. The memory may be integrated with the processor, or the memory may be spaced apart from the processor. During specific implementation, the memory and the processor may be integrated on a same chip, or may be separately arranged on different chips. A type of the memory and a manner of configuring the memory and the processor are not limited in this embodiment of this application.

According to a fourteenth aspect, an embodiment of this application provides a communication system. The communication system includes the session management network element in the first aspect and the mobility management network element in the fourth aspect. Alternatively, the communication system includes the mobility management network element in the second aspect and the session management network element in the fifth aspect. Alternatively, the communication system includes the access network element in the third aspect, the session management network element in the fifth aspect, and the mobility management network element in the sixth aspect.

According to a fifteenth aspect, this application provides a computer-readable storage medium, where the computer storage medium stores computer-readable instructions, and when a computer reads and executes the computer-readable instructions, the computer is enabled to perform the method in any possible design of the first aspect to the ninth aspect.

According to a sixteenth aspect, this application provides a computer program product. When a computer reads and executes the computer program product, the computer is enabled to perform the method in any possible design of the first aspect to the ninth aspect.

According to a seventeenth aspect, this application provides a chip, where the chip includes a processor, and the processor is coupled to a memory, and is configured to read and execute a software program stored in the memory, to implement the method in any possible design of the first aspect to the ninth aspect.

These aspects or other aspects of this application are more brief and comprehensible in descriptions of the following embodiments.

### BRIEF DESCRIPTION OF DRAWINGS

FIG. 1 is a schematic diagram of a network architecture independently deployed by a first network according to an embodiment of this application;
FIG. 2 is a schematic diagram of a network architecture independently deployed by a second network according to an embodiment of this application;
FIG. 3 is a schematic diagram of a network architecture jointly deployed by a first network and a second network according to an embodiment of this application;
FIG. 4 is a schematic flowchart of transmitting data of a first service in a 4G network and a 5G network according to an embodiment of this application;
FIG. 5 is a schematic flowchart corresponding to a communication method according to Embodiment 1 of this application;
FIG. 6 is a schematic flowchart corresponding to a communication method according to Embodiment 2 of this application;
FIG. 7 is a schematic flowchart corresponding to a communication method according to Embodiment 3 of this application;
FIG. 8 is a schematic flowchart corresponding to a communication method according to Embodiment 4 of this application;
FIG. 9 is a schematic flowchart corresponding to a communication method according to Embodiment 5 of this application;
FIG. 10 is a schematic flowchart corresponding to a communication method according to Embodiment 6 of this application;
FIG. 11 is a possible example block diagram of an apparatus according to an embodiment of this application;
FIG. 12 is a schematic diagram of a structure of a core network element according to an embodiment of this application;
FIG. 13 is a schematic diagram of a structure of an access network element according to an embodiment of this application;
FIG. 14 is a schematic diagram of a structure of a terminal device according to an embodiment of this application; and
FIG. 15 is a schematic diagram of a structure of an application server according to an embodiment of this application.

### DESCRIPTION OF EMBODIMENTS

The following describes the technical solutions in embodiments of this application with reference to the accompanying drawings in embodiments of this application.

First, some terms in embodiments of this application are explained and described, to facilitate understanding by a person skilled in the art.

### (1) First network and second network

The first network and the second network may be networks that support different communication standards. The first network may also be referred to as a first communication standard network, and the second network may also be referred to as a second communication standard network. For example, the first network may be a 4G network, and the second network may be a 5G network. The 5G network may also be referred to as a 5G communication system, and the 4G network may also be referred to as an evolved packet system (evolved packet system, EPS) network or a 4G communication system. In another example, the first network may be a public land mobile network (public land mobile network, PLMN) in the 4G network, and the second network may be a PLMN in the 5G network. It should be understood that the first network and the second network may alternatively be networks of other types. This is not specifically limited. In embodiments of this application, descriptions are made by using an example in which the first network is a 4G network and the second network is a 5G network.

### (2) PDN connection and PDU session

A protocol data network (protocol data network, PDN) connection is a data transmission channel established for a terminal device in the first network (for example, the 4G network). One PDN connection may include one or more bearers (that is, EPS bearers). A context of the PDN connection may include an Internet protocol (Internet protocol, IP) address used by the PDN connection and a context of each EPS bearer in the PDN connection. The context of the EPS bearer may include quality of service (quality of service, QoS) information of the EPS bearer, an EPS bearer identity (EPS bearer identity, EBI), a traffic flow template (traffic flow template, TFT), and the like.

A protocol data unit (protocol data unit, PDU) session is a data transmission channel established for the terminal device in the second network (for example, the 5G network). One PDU session may include one or more QoS flows. A context of the PDU session may include an IP address used by the PDU session and information about each QoS flow in the PDU session. The information about the QoS flow may include QoS information of the QoS flow, a QoS flow identity (QoS flow identity, QFI), and a QoS flow template.

For example, there may be a correspondence between the PDN connection in the 4G network and the PDU session in the 5G network. In a scenario in which the 4G network and the 5G network coexist, when the terminal device moves from the 5G network to the 4G network, a PDN connection 1 corresponding to a PDU session 1 of the terminal device is established in the 4G network. For example, a context of the PDN connection 1 may be obtained based on a context of the PDU session 1, and then the PDN connection 1 may be established based on the context of the PDN connection 1. For implementation of obtaining the context of the PDN connection 1 based on the context of the PDU session 1, refer to the conventional technology. For example, IP addresses of the PDU session 1 and the PDN connection 1 may be the same. The PDU session 1 includes a first QoS flow, where the first QoS flow may be a service data flow or a group of service data flows, and the PDN connection 1 may include a first EPS bearer. Therefore, the first QoS flow may be mapped to the first EPS bearer based on a predefined mapping rule, and a context of the first EPS bearer may be obtained based on information about the first QoS flow.

### (3) Transmission manner

Embodiments of this application involve five transmission manners, namely, a first transmission manner, a second transmission manner, a third transmission manner, a fourth transmission manner, and a fifth transmission manner.

The first transmission manner may be a multi-cast transmission manner of the first network (for example, the 4G network), and the multi-cast transmission manner may be understood as "point to multi-point" (point to multi-point, PTM) communication. The first transmission manner is applicable to a scenario in which the first network and the second network are jointly deployed (in other words, the first network and the second network coexist), or is applicable to a scenario in which the first network is independently deployed. The first transmission manner may be sending data to the terminal device by using a multi-cast bearer, where the multi-cast bearer may also be referred to as an MBMS bearer. The first transmission manner may also be referred to as a multi-cast bearer transmission manner, an MBMS bearer transmission manner, or an eMBMS transmission manner. In the first transmission manner, a destination address of a data packet is a multi-cast IP address.

The fifth transmission manner may be a unicast transmission manner of the first network (for example, the 4G network), and the unicast transmission manner may be understood as "point to point" (point to point, PTP) communication. The fifth transmission manner is applicable to the scenario in which the first network and the second network are jointly deployed, or is applicable to the scenario in which the first network is independently deployed. The fifth transmission manner may be sending data to the terminal device by using the PDN connection (or the EPS bearer, where the EPS bearer may also be referred to as an EPS unicast bearer or a unicast bearer). In the fifth transmission manner, a destination address of a data packet is an IP address of the terminal device.

The second transmission manner may be another unicast transmission manner of the first network (for example, the 4G network). The second transmission manner is applicable to the scenario in which the first network and the second network are jointly deployed. In the second transmission manner, data is also sent to the terminal device by using the PDN connection of the first network. A difference between the second transmission manner and the fifth transmission manner lies in that, in the second transmission manner, data is first sent to a multi-cast user plane network element, the multi-cast user plane network element sends the data to a user plane network element of a PDN connection of the terminal device, and then the user plane network element sends the data to the terminal device by using the PDN connection. However, in the fifth transmission manner, the data is not sent through the multi-cast user plane network element. In the second transmission manner, a destination address of a data packet is a multi-cast IP address.

The third transmission manner may be a multi-cast transmission manner of the second network (for example, the 5G network). The third transmission manner is applicable to the scenario in which the first network and the second network are jointly deployed, or is applicable to a scenario in which the second network is independently deployed. When data of a multi-cast service is transmitted in the third transmission manner, a corresponding multi-cast session may be created for the multi-cast service. One multi-cast service may correspond to one multi-cast session, one multi-cast service may include one or more service data flows, and a plurality of service data flows may correspond to one or more multi-cast QoS flows. In other words, data of the multi-cast service in the multi-cast session may be transmitted in a form of a multi-cast QoS flow. This is not limited in this embodiment of this application. The third transmission manner may also be referred to as a SMBS transmission manner or a 5G MBS transmission manner. The third transmission manner may include two manners, namely, a shared MBS transmission manner (shared MBS delivery) and an individual MBS transmission manner (individual MBS delivery). The shared MBS transmission manner means that data is first sent to the multi-cast user plane network element, the multi-cast user plane network element directly sends the data to an access network element through a shared tunnel, and then the access network element sends the data to the terminal device. The individual MBS transmission manner means that data is first sent to the multi-cast user plane network element, the multi-cast user plane network element sends the data to an anchor user plane network element of a PDU session of the terminal device, and the anchor user plane network element sends the data to the terminal device by using the PDU session. In the third transmission manner, a destination address of a data packet is a multi-cast IP address.

The fourth transmission manner may be a unicast transmission manner of the second network (for example, the 5G network). The fourth transmission manner is applicable to the scenario in which the first network and the second network are jointly deployed, or is applicable to a scenario in which the second network is independently deployed. The fourth transmission manner may be sending data to the terminal device by using a PDU session of the terminal device. Data in the PDU session may be transmitted in a form of a QoS flow. This is not limited in this embodiment of this application. A difference between the fourth transmission manner and the individual MBS transmission manner in the third transmission manner lies in that, in the fourth transmission manner, a data packet is not transmitted by using the multi-cast session, and a destination address of the data packet is an IP address of the terminal device.

It is to be noted that, "multi-cast" in embodiments of this application is a broad concept, and may include multicast (multicast) and/or broadcast (broadcast). In other words, multi-cast service transmission in embodiments of this application may be applied to both multicast service transmission and broadcast service transmission. It may be understood that "multi-cast" mentioned in embodiments of this application may be replaced with "multicast", or "broadcast", or "multicast/broadcast" .

The following describes a network architecture provided in embodiments of this application.

### 1. Network architecture in which the first network is independently deployed

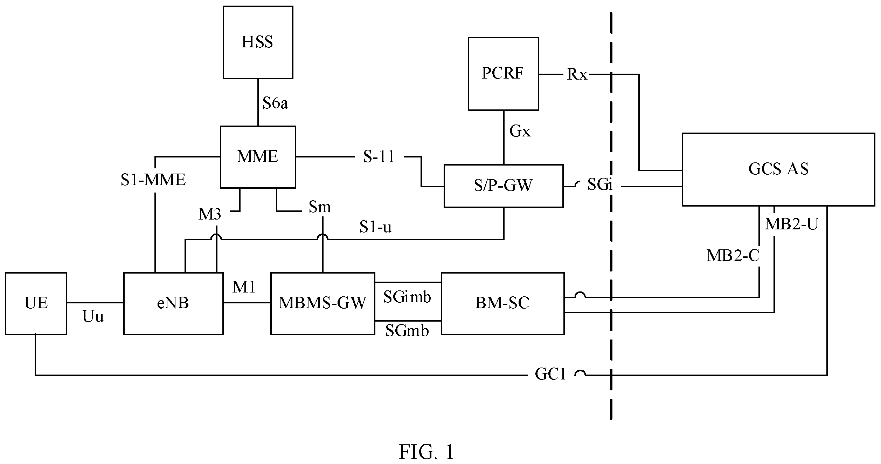

FIG. 1 is a schematic diagram of a possible network architecture independently deployed by a first network according to an embodiment of this application. For example, the first network is a 4G network, and the network architecture may support an eMBMS of the 4G network. As shown in FIG. 1, the network architecture may include the following possible devices or network elements.
(1) Terminal device: It is also referred to as user equipment (user equipment, UE), a terminal (terminal), a mobile station (mobile station, MS), a mobile terminal (mobile terminal, MT), a customer premise equipment (Customer Premise Equipment, CPE), a residential gateway (Residential Gateway, RG), or the like, and may be a device with a wireless transceiver function. The terminal device may be deployed on land, including an indoor, outdoor, and/or handheld or in-vehicle device; or may be deployed on water (for example, a ship); or may be deployed in the air (for example, on an airplane, a balloon, or a satellite). The terminal device may include a handheld device, an in-vehicle device, a wearable device, or a computing device that has a wireless communication function. For example, the terminal device may be a mobile phone (mobile phone), a tablet computer, or a computer with a wireless transceiver function. Alternatively, the terminal device may be a virtual reality (virtual reality, VR) terminal device, an augmented reality (augmented reality, AR) terminal device, a wireless terminal in industrial control, a wireless terminal in self driving, a wireless terminal in telemedicine, a wireless terminal in a smart grid, a wireless terminal in a smart city (smart city), a wireless terminal in a smart home (smart home), or the like.
(2) Access network element: It is a node or a device that connects the terminal device to a wireless network, and the access network element may also be referred to as a radio access network (radio access network, RAN) device or an access network device. The access network element, for example, includes but is not limited to: a new generation NodeB (generation NodeB, gNB), an evolved NodeB (evolved NodeB, eNB), a next generation eNB (next generation eNB, ng-eNB), a wireless backhaul device, a radio network controller (radio network controller, RNC), a NodeB (NodeB, NB), a base station controller (base station controller, BSC), a base transceiver station (base transceiver station, BTS), a home base station ((home evolved NodeB, HeNB) or (home NodeB, HNB)), a baseband unit (baseband unit, BBU), a transmitting and receiving point (transmitting and receiving point, TRP), a transmitting point (transmitting point, TP), a mobile switching center, an access point (access point, AP) in a wireless local area network (wireless local area network, WLAN), or the like. The access network element may also be a module or unit that implements some functions of the base station, for example, a central unit (central unit, CU) or a distributed unit (distributed unit, DU). A specific technology and a specific device form used by the access network element are not limited in this embodiment of this application. For example, in the 4G network, the access network element may be an eNB.
(3) Mobility management network element: It is responsible for performing authentication, authorization, and mobility management on the terminal device. For example, in the 4G network, the mobility management network element may be a mobility management entity (mobility management entity, MME).
(4) Multi-cast service network element: It is configured to store subscription data, allocate a temporary mobile group identity (temporary mobile group identity, TMGI), initiate or terminate an MBMS bearer resource, and the like. For example, in the 4G network, the multi-cast service network element may be a broadcast-multicast service centre (broadcast-multicast service centre, BM-SC).
(5) Multi-cast service gateway: It is configured to receive data of a multi-cast service, and send data of the multi-cast service to the access network element. For example, in the 4G network, the multi-cast service gateway may be an MBMS gateway (MBMS gateway, MBMS-GW). The MBMS-GW receives the data of the multi-cast service from the BM-SC through an SGimb interface between the MBMS-GW and the BM-SC, and send the data of the multi-cast service to the access network element.
(6) Application server (application server, AS): It is a data source of a service, and is configured to send data of the service to the terminal device. For example, in the 4G network, the application server may be a group communication service application server (group communication service application server, GSC AS).
(7) Serving gateway (serving gateway, SGW): It is responsible for forwarding data, storing downlink data, and the like.
(8) Packet data network gateway (packet data network gateway, PGW): The PGW includes a PGW-user plane (PGW-user plane, PGW-U) and a PGW-control plane (PGW-control plane, PGW-C), where the PGW-C is a control plane network element in the 4G network, and provides a control plane service for a PDN connection of the terminal device; and the PGW-U is a user plane network element in the 4G network, and provides a user plane service for the PDN connection of the terminal device.

For example, the SGW and the PGW may be co-deployed, and when being co-deployed, the SGW and the PGW may be referred to as an S/P-GW. FIG. 1 is illustrated by using an example in which the SGW and the PGW are co-deployed.

(9) Policy control network element: It is responsible for generating a policy for establishing a data bearer by a user. For example, in the 4G network, the policy control network element may be a policy and charging rules function (policy and charging rules function, PCRF) network element.

(10) Data management network element: It is configured to store subscription data of the user. For example, in the 4G network, the data management network element may be a home subscriber server (home subscriber server, HSS).

It is to be noted that, in the network architecture shown in FIG. 1, all network elements except the terminal device and the access network element may be referred to as core network elements. In addition, the network architecture shown in FIG. 1 may further include other possible devices or network elements. This is not specifically limited.

Based on the network architecture shown in FIG. 1, a first service is used as an example, and transmission paths for transmitting data of the first service in different transmission manners are described below.

For example, the AS may send the data of the first service to the terminal device in the first transmission manner (that is, the eMBMS transmission manner). A transmission path corresponding to the eMBMS transmission manner may be: AS → BM-SC → MBMS-GW → eNB→ terminal device, that is, the AS sends data to the BM-SC through an MB2-U interface, the BM-SC sends the data to the MBMS-GW through the SGimb interface, the MBMS-GW sends the data to the eNB through an M1 interface, and then the eNB sends the data to the terminal device through a Uu interface (or referred to as an air interface).

In another example, the AS may alternatively send the data of the first service to the terminal device in the fifth transmission manner. A transmission path corresponding to the fifth transmission manner may be: AS → S/P-GW → eNB → terminal device, that is, the AS sends data to the S/P-GW through an SGi interface, the S/P-GW sends the data to the eNB through an S 1-U interface, and then the eNB sends the data to the terminal device through the Uu interface. In addition, when the SGW and the PGW are separately deployed, the transmission path corresponding to the foregoing fifth transmission manner may be: AS → PGW-U network element → SGW network element → eNB → terminal device.

### 2. Network architecture in which the second network is independently deployed

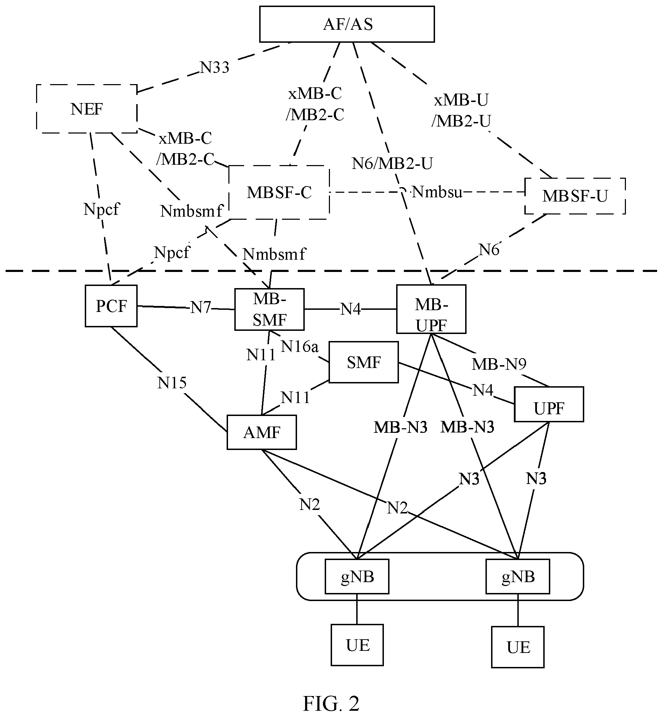

FIG. 2 is a schematic diagram of a possible network architecture independently deployed by a second network according to an embodiment of this application. For example, the second network is a 5G network, and the network architecture may support an MBS of the 5G network. As shown in FIG. 2, the network architecture may include the following possible devices or network elements.
(1) Terminal device: For details, refer to the foregoing description.
(2) Access network element: For details, refer to the foregoing description. For example, in the 5G network, the access network element may be a gNB.
(3) Mobility management network element: It is configured to perform authentication and authorization for the user, and perform management on mobility of the user. For example, in the 5G network, the mobility management network element may be an access and mobility management function (access and mobility management function, AMF) network element.
(4) Session management network element: It is for session management, allocation and management of an IP address of the terminal device, and selection and management of a user plane function. For example, in the 5G network, the session management network element may be a session management function (session management function, SMF) network element.
(5) User plane network element: It is configured to receive user plane data and sends the data to the access network element. For example, in the 5G network, the user plane network element may be a user plane function (user plane function, UPF) network element.
(6) Policy control network element: It is configured to provide a unified policy framework for guiding a network behavior, and provide policy rule information and the like for a control plane function network element. For example, in the 5G network, the policy control network element may be a policy control function (policy control function, PCF) network element.
(7) Multi-cast session management network element: It is a session management network element configured to control a multi-cast service. For example, in the 5G network, the multi-cast session management network element may be a multicast/broadcast (multicast/broadcast, MB)-SMF network element, and the MB-SMF controls establishment of a path from an MB-UPF to the access network element.
(8) Multi-cast user plane network element: It is configured to transmit data and the like of the multi-cast service. For example, in the 5G network, the multi-cast user plane network element may be an MB-UPF network element.
(9) Application server: It is a data source of a service, and is configured to send data of the service to the terminal device. For example, in the 5G network, the application server may alternatively be replaced with an application function (application function, AF) network element.
(10) Network exposure function (network exposure function, NEF) network element: It provides exposure of 5G network capabilities and events to the outside, and receives related external messages.
(11) Multi-cast service network element: For example, in the 5G network, the multi-cast service network element may be a multicast/broadcast service (multicast/broadcast service function, MBSF) network element, and the MBSF network element may include an MBSF control plane (that is, MBSF-C) network element and an MBSF user plane (that is, MBSF-U) network element.

The MBSF-C network element has a service layer function, for example, supporting a streaming (streaming) protocol and a reliable retransmission protocol. The MBSF-C network element may further send a service announcement (service announcement) to the terminal device and distributes a private key of a multi-cast service to the terminal device. The MBSF-C network element may be an optional network element. When the MBSF-C network element exists, the AS may directly interface with the MBSF-C network element to send a service requirement to a core network, and then the MBSF-C network element interfaces with the MB-SMF network element to create a multi-cast session (optionally, the MBSF-C network element may also interface with the MB-SMF through the NEF network element). Alternatively, the AS may first interface with the NEF network element and interface with the MBSF-C network element through the NEF network element, and then the MBSF-C network element further interfaces with the MB-SMF network element. For example, the MBSF-C network element and the NEF network element may be co-deployed.

A main function of the MBSF-U network element is to process a data packet of the multi-cast service, for example, encapsulate the data packet based on the streaming protocol, encrypt the data packet, or encode the data packet. For example, the MBSF-U network element may be an optional network element. If the data packet of the multi-cast service needs to be processed by a core network, the AS may first send the data packet to the MBSF-U network element, and the MBSF-U network element processes the data packet and then sends the processed data packet to the MB-UPF network element. It should be understood that, in the following embodiments of this application, an example in which the AS sends the data packet to the MB-UPF network element is used for description. During specific implementation, the AS may first send the data packet to the MBSF-U network element, and the MBSF-U network element processes the data packet and then sends the processed data packet to the MB-UPF network element.

It is to be noted that, in the network architecture shown in FIG. 2, all network elements except the terminal device and the access network element may be referred to as core network elements. In addition, the network architecture shown in FIG. 2 may further include other possible devices or network elements, for example, a unified data repository (unified data repository, UDR) and a data management network element. In the 5G network, the data management network element may be a unified data management (unified data management, UDM) network element.

Based on the network architecture shown in FIG. 2, a first service is used as an example, and transmission paths for transmitting the first service in different transmission manners are described below.

For example, the AS may send data of the first service to the terminal device in the third transmission manner (that is, the 5MBS transmission manner). Specifically, when the data is sent in the third transmission manner, the AS may send the data to the MB-UPF network element (an N6 interface or an MB2-U interface in FIG. 2, that is, a direct interface between the AS and the MB-UPF network element). If the access network element supports a 5G MBS, the MB-UPF network element may send the data to the access network element through a shared tunnel between the MB-UPF network element and the access network element (an MB-N3 interface, where the shared tunnel means that the MB-UPF network element may send a piece of data to the access network element through the tunnel, and the access network element may send the data to a plurality of terminal devices). The access network element may flexibly determine a play mode, that is, a PTM manner or a PTP manner, based on an air interface condition, a number of terminals that listen to the service, and the like. For the PTM manner, the access network element sends only one piece of data, and the plurality of terminal devices may receive the data. For the PTP manner, only one terminal device can receive one piece of data sent by the access network element. For a same service, the access network element may use both the PTM manner and the PTP manner. For example, the PTM manner is used for a terminal device 1 and a terminal device 2, and the PTP manner is used for a terminal device 3. Therefore, a transmission path corresponding to the shared MBS transmission manner in the third transmission manner is: AS → MB-UPF network element → gNB → terminal device. If the access network element does not support the 5G MBS, the MB-UPF network element may send the data to an anchor UPF network element of a PDU session, and then the UPF network element may send the data to the terminal device by using the PDU session through the access network element. Therefore, a transmission path corresponding to the individual MBS transmission manner in the third transmission manner may be: AS → MB-UPF network element → UPF network element → gNB → terminal device.

In another example, the AS may alternatively send the data of the first service to the terminal device in the fourth transmission manner. A transmission path corresponding to the fourth transmission manner may be: AS → UPF network element → gNB → terminal device, that is, the AS sends data to an anchor UPF network element of a PDU session (where an interface between the AS and the UPF network element is not shown in the figure), and then the UPF network element may send the data to the terminal device by using the PDU session.

### 3. Network architecture in which the first network and the second network are jointly deployed

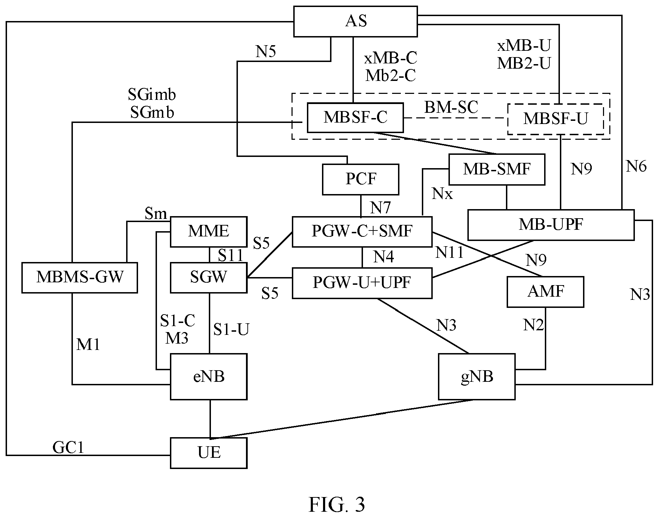

FIG. 3 is a schematic diagram of a possible network architecture jointly deployed by a first network and a second network according to an embodiment of this application. For example, the first network is a 4G network, the second network is a 5G network, and the network architecture may support an eMBMS of the 4G network and an MBS of the 5G network. As shown in FIG. 3, the network architecture may include a network element in the 4G network, a network element in the 5G network, and a network element shared by the 4G network and the 5G network. (or a network element co-deployed by the 4G network and the 5G network), an AS, and a terminal device. The network element in the 4G network may include a first access network element (that is, an eNB in the 4G network), a first mobility management network element (that is, an MME in the 4G network), an SGW, an MBMS-GW, and the like. The network element in the 5G network may include a second access network element (that is, a gNB in the 5G network), a second mobility management network element (that is, an AMF network element in the 5G network), an MB-UPF, an MB-SMF, and the like. The network element shared by the 4G network and the 5G network may include a session management network element (that is, a PGW-C+SMF), a user plane network element (that is, a PGW-U+UPF), an MBSF+BM-SC, a policy control network element (that is, a PCF network element), and the like.

The PGW-C+SMF may include functions of the SMF network element and a PGW-C network element. The SMF+PGW-C may also be referred to as a PGW-C+SMF, provided that a network element including a function of the SMF network element and a function of the PGW-C network element is the same as this network element. In this embodiment of this application, "+" indicates that two network elements are co-deployed.

The UPF+PGW-U may include functions of the UPF network element and the PGW-U network element. The UPF+PGW-U may also be referred to as a PGW-U+UPF, provided that a network element including a function of the UPF network element and a function of the PGW-U network element is the same as this network element.

The MBSF+BM-SC may include functions of the MBSF network element and the BM-SC network element. The MBSF+BM-SC may also be referred to as an MBSF network element for short (that is, the functions of the BM-SC network element are integrated into the MBSF network element), provided that a network element including a function of the MBSF network element and a function of the BM-SC network element is the same as this network element. When the MBSF network element is divided into two parts, namely, an MBSF-C and an MBSF-U, a corresponding function of the BM-SC network element is also correspondingly split into the MBSF-C and the MBSF-U, that is, some functions of a control plane of the BM-SC network element are co-deployed with the MBSF-C, and some functions of a user plane of the BM-SC network element are co-deployed with the MBSF-U. It may be understood that, FIG. 3 is illustrated by using an example in which the MBSF network element and the BM-SC network element are co-deployed. During actual deployment, the MBSF network element and the BM-SC network element may also be separately deployed. In this case, an interface may exist between the BM-SC network element and the MBSF network element, to facilitate communication between the BM-SC network element and the MBSF network element.

It may be understood that the network architecture shown in FIG. 3 may further include other possible devices or network elements, for example, a UDR network element, an HSS+UDM, and an NEF network element. The HSS+UDM is configured to implement functions of an HSS network element and a UDM network element, and the HSS+UDM may also be referred to as a UDM network element for short. The NEF network element may be co-deployed with the MBSF network element, or may not be co-deployed with the MBSF network element. When the NEF network element and the MBSF network element are not co-deployed, the AS may communicate with the MBSF network element through the NEF network element, or the AS may directly communicate with the MBSF network element through an interface between the AS and the MBSF network element.

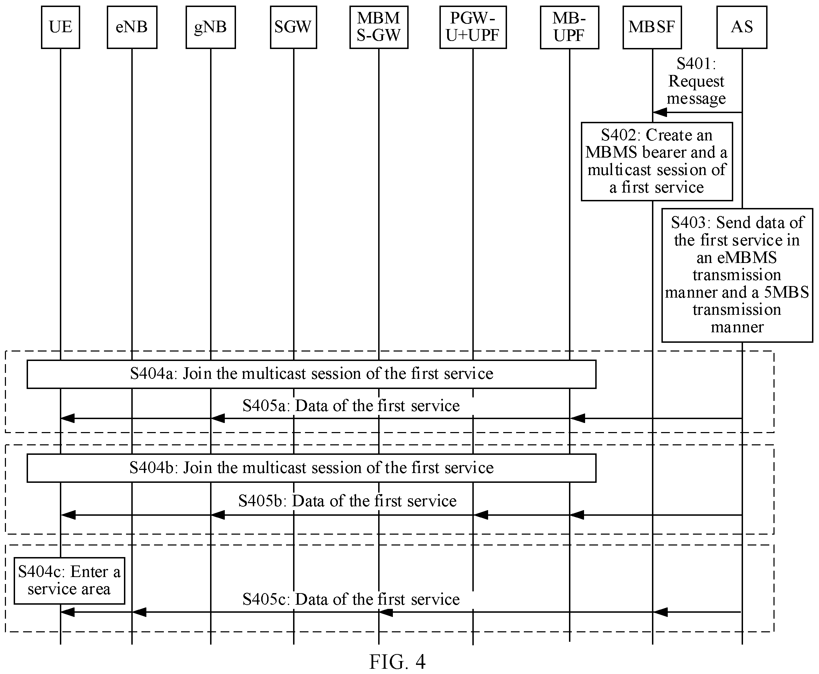

In the network architecture shown in FIG. 3, the AS may send the data of the first service in the eMBMS transmission manner in the 4G network, and send the data of the first service in the SMBS transmission manner in the 5G network. A possible procedure is described below with reference to FIG. 4.

FIG. 4 is a schematic flowchart of transmitting data of a first service in a 4G network and a 5G network according to an embodiment of this application. As shown in FIG. 4, the procedure may include the following steps.

S401: An AS requests, from an MBSF network element, to send data of a first service in an eMBMS transmission manner in a 4G network, and send the data of the first service in a SMBS transmission manner in a 5G network.

S402: The MBSF network element creates an MBMS bearer of the first service in the 4G network, and creates a multi-cast session of the first service in the 5G network.

The creating an MBMS bearer of the first service in the 4G network may be establishing an MB2-U interface, establishing an interface from the MBSF network element to an MBMS-GW and an interface from the MBMS-GW to an eNB, and notifying the eNB to establish an MBMS air interface bearer.

The creating a multi-cast session of the first service in the 5G network may be establishing an interface between the AS and an MB-UPF network element. When the MBSF network element exists, the MB2-U interface between the AS and the MBSF network element is established, and an interface between the MBSF network element and the MB-UPF network element is established.

S403: The AS sends the data of the first service in the eMBMS transmission manner in the 4G network, and sends the data of the first service in the SMBS transmission manner in the 5G network.

It is to be noted that, in the 5G network, before any terminal device joins the multi-cast session of the first service, data of the first service is sent only to the MB-UPF network element. In other words, if no terminal device joins the multi-cast session of the first service, the data is not further sent, that is, is not sent to the access network element or an anchor UPF network element of any PDU session.

For S401 to S403, the network architecture shown in FIG. 3 (that is, the BM-SC network element and the MBSF network element are co-deployed) is used as an example. In a possible implementation, the AS may send a request message to the MBSF network element, where the request message is used to request to send the data of the first service in the eMBMS transmission manner in the 4G network and send the data of the first service in the SMBS transmission manner in the 5G network. Correspondingly, after receiving the request message, the MBSF network element may create an MBMS bearer in the 4G network, and then the AS may send the data of the first service in the eMBMS transmission manner in the 4G network. After receiving the request message, the MBSF network element may create a multi-cast session in the 5G network, and then the AS may send the data of the first service to the MB-UPF network element in the SMBS transmission manner in the 5G network.

In another possible implementation, the AS may send a request message 1 to the MBSF network element, where the request message 1 requests to send the data of the first service in the eMBMS transmission manner in the 4G network. Correspondingly, after receiving the request message 1, the MBSF network element may create an MBMS bearer in the 4G network, and then the AS may send the data of the first service in the eMBMS transmission manner in the 4G network. The AS may send a request message 2 to the MBSF network element, where the request message 2 requests to send the data of the first service in the SMBS transmission manner in the 5G network. Correspondingly, after receiving the request message 2, the MBSF network element may create a multi-cast session in the 5G network, and then the AS may send the data of the first service to the MB-UPF network element in the 5MBS transmission manner in the 5G network.

It is to be noted that, when the BM-SC network element and the MBSF network element are separately deployed, the AS may send a request message 1 to the BM-SC network element, where the request message 1 requests to send the data of the first service in the eMBMS transmission manner in the 4G network; and send a request message 2 to the MBSF network element, where the request message 2 requests to send the data of the first service in the SMBS transmission manner in the 5G network. Subsequently, the AS may send the data of the first service in the eMBMS transmission manner in the 4G network, and send the data of the first service in the SMBS transmission manner in the 5G network.

Further, the foregoing procedure may further include S404a and S405a, or S404b and S405b, or S404c and S405c.

S404a: The terminal device joins the multi-cast session of the first service.

The terminal device may request to join the multi-cast session of the first service. For example, the terminal device may request, through signaling of the PDU session, to join the multi-cast session of the first service. In this manner, in a process of joining the terminal device to the multi-cast session, a shared tunnel from the MB-UPF network element to the access network element may be established, and the access network element may configure, for the terminal device, a radio resource for receiving the data of the first service by using the multi-cast session. It should be understood that the transmission manner is a shared MBS transmission manner. The radio resource configured by the access network element for the terminal device may be a radio resource corresponding to a PTP manner, that is, a radio resource allocated only for the terminal device to receive the data of the first service, or a radio resource corresponding to a PTM manner, that is, a radio resource allocated to a plurality of terminal devices (including the terminal device) for receiving the data of the first service.

S405a: The AS sends the data of the first service to the terminal device through a transmission path a, and correspondingly, the terminal device may receive the data of the first service through the transmission path a.

The transmission path a (that is, a path corresponding to the shared MBS transmission manner) may be: AS → MB-UPF → gNB → terminal device.

S404b: The terminal device joins the multi-cast session of the first service.

The terminal device may request to join the multi-cast session of the first service. For example, the terminal device may request, through signaling of the PDU session, to join the multi-cast session of the first service. In this manner, in a process of joining the terminal device to the multi-cast session, a tunnel from the MB-UPF network element to the PGW-U+UPF may be established, and the PGW-U+UPF may map the data of the first service received from the MB-UPF network element to the PDU session of the terminal device and then send the data to the terminal device by using the PDU session. It should be understood that the transmission manner is an individual MBS transmission manner.

S405b: The AS sends the data of the first service to the terminal device through a transmission path b, and correspondingly, the terminal device may receive the data of the first service through the transmission path b.

The transmission path b (that is, a transmission path corresponding to the individual MBS transmission manner) may be: AS → MB-UPF → PGW-U+UPF → gNB - terminal device.

S404c: The terminal device enters a service area that supports transmission of the first service in the eMBMS transmission manner in the 4G network.

S405c: The AS sends the data of the first service to the terminal device through a transmission path c, and correspondingly, the terminal device may receive the data of the first service through the transmission path c.

The transmission path c (that is, a transmission path corresponding to the eMBMS transmission manner) may be: AS → MBSF network element → MBMS-GW → eNB → terminal device.

It is to be noted that: (1) The network element in FIG. 1, FIG. 2, and FIG. 3 may also be referred to as an entity or a functional entity. For example, the AMF network element may also be referred to as an AMF entity or an AMF functional entity, and the SMF network element may also be referred to as an SMF entity or an SMF functional entity. The network element may be a network element in a hardware device, a software function running on dedicated hardware, or a virtualization function instantiated on a platform (for example, a cloud platform). Optionally, the foregoing network element may be implemented by one device, or may be jointly implemented by a plurality of devices, or may be implemented by a functional module in one device. This is not specifically limited in this embodiment of this application.

(2) In FIG. 1, FIG. 2, or FIG. 3, letters and digits near connection lines between network elements represent names of communication interfaces between the network elements. For meanings of these communication interfaces, refer to meanings defined in related standards and protocols. It may be understood that the communication interface between the network elements may alternatively have another name. This is not limited in this embodiment of this application.

(3) The network architectures and service scenarios described in FIG. 1, FIG. 2, and FIG. 3 are intended to describe the technical solutions in embodiments of this application more clearly, but do not constitute a limitation on the technical solutions provided in embodiments of this application. A person of ordinary skill in the art may know that, with evolution of a communication system architecture and emergence of a new service scenario, the technical solutions provided in embodiments of this application are also applicable to similar technical problems.

(4) For the terminal device, the access network element, the core network element, the application server, and the like in embodiments of this application, using the terminal device as an example, an apparatus configured to implement a function of the terminal device may be a terminal device, or may be an apparatus that can support the terminal device in implementing the function, for example, a chip system or a composite component or component that can implement the function of the terminal device, and the apparatus may be disposed in the terminal device. In embodiments of this application, the chip system may include a chip, or may include a chip and another discrete component. In the technical solutions provided in embodiments of this application, the technical solutions provided in embodiments of this application are described by using an example in which the apparatus configured to implement the function of the terminal device is a terminal device.

Based on the foregoing description, related implementation when the terminal device moves between the first network and the second network is studied in this embodiment of this application. Specifically, an embodiment of this application provides a communication method, to send data of a first service to a terminal device after the terminal device moves from a second network to a first network or moves from a first network to a second network.

The communication method provided in embodiments of this application is described in detail below with reference to Embodiment 1 to Embodiment 6. It is to be noted that, in Embodiment 1 to Embodiment 6, information 1 may be replaced with first information, information 2 may be replaced with second information, information 4 may be replaced with third information, information 5 may be replaced with fourth information, information 6 may be replaced with fifth information, information 7 may be replaced with sixth information, information 8 may be replaced with seventh information, information 9 may be replaced with eighth information, and information 10 may be replaced with ninth information. In Embodiment 1 to Embodiment 6, a transmission path 1 may be replaced with a first transmission path, a transmission path 4 may be replaced with a second transmission path, and a transmission path 5 may be replaced with a third transmission path. In Embodiment 1 to Embodiment 6, a core network element 1 may be replaced with a first core network element, a core network element 2 may be replaced with a second core network element, a core network element 3 may be replaced with a third core network element, a core network element 4 may be replaced with a fourth core network element, a core network element 5 may be replaced with a fifth core network element, a core network element 6 may be replaced with a sixth core network element, and a core network element 7 may be replaced with a seventh core network element.

For example, a scenario to which Embodiment 1 to Embodiment 3 are applicable may be as follows: The terminal device moves from a 5G network to a 4G network when the terminal device receives data of a first service in a SMBS transmission manner in the 5G network. In this scenario, before the terminal device moves from the 5G network to the 4G network, the terminal device is in a connected state. In this case, when the terminal device moves from the 5G network to the 4G network, the terminal device may access the 4G network in a handover procedure, or may access the 4G network through redirection. For details, refer to descriptions in Embodiment 1 to Embodiment 3.

When the terminal device moves from the 5G network to the 4G network, if a target cell of the terminal device supports transmission of the data of the first service in a multi-cast transmission manner (that is, an eMBMS transmission manner) in the 4G network, the first service may not need to be handed over to the unicast transmission manner through the 4G network for transmission. In this case, after accessing the target cell, the terminal device may directly receive the data of the first service in the eMBMS transmission manner. If the target cell of the terminal device does not support transmission of the data of the first service in the eMBMS transmission manner, to maintain continuity of the first service, the data of the first service may be handed over to a unicast transmission manner through the 4G network for transmission.

However, currently, it cannot be determined whether the target cell of the terminal device supports the transmission of the data of the first service in the multi-cast transmission manner through the 4G network.

Based on this, this application provides Embodiment 1 to Embodiment 3, to determine whether the target cell of the terminal device supports the transmission of the data of the first service in the multi-cast transmission manner through the 4G network, and send the data of the first service to the terminal device in an appropriate manner after the terminal device moves from the 5G network to the 4G network.

### Embodiment 1

In Embodiment 1, a possible implementation procedure of the communication method is described by using a network architecture shown in FIG. 3 as an example.

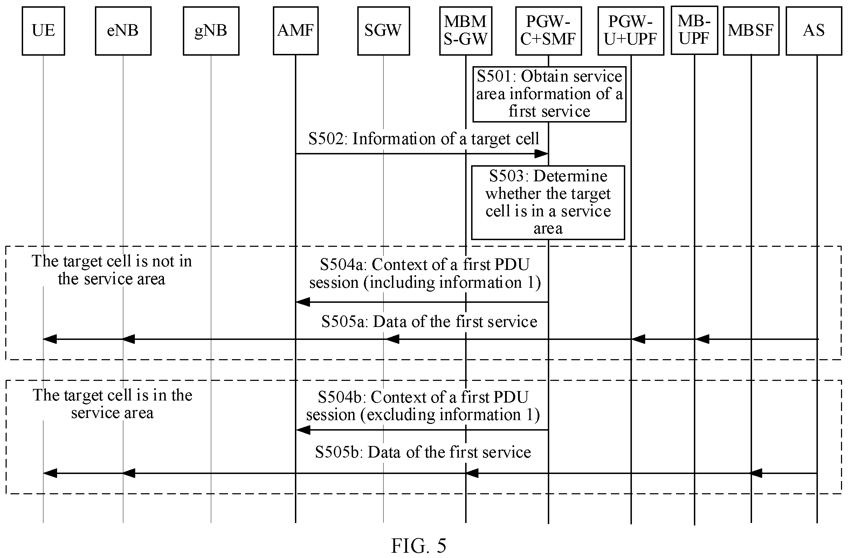

FIG. 5 is a schematic flowchart corresponding to a communication method according to Embodiment 1 of this application. As shown in FIG. 5, the procedure may include the following steps.

S501: A PGW-C+SMF obtains service area information of a first service, where the service area information indicates a service area that supports transmission of the first service in a first transmission manner (that is, an eMBMS transmission manner) in a 4G network.

For example, the service area information includes at least one of the following: an identifier of a PLMN corresponding to the service area; a TAI corresponding to the service area; and an identifier of a cell corresponding to the service area.

There may be a plurality of implementations in which the PGW-C+SMF obtains the service area information of the first service. The following describes two possible implementations.

### (1) Implementation 1

A core network element 1 may send the service area information of the first service to the PGW-C+SMF, and then the PGW-C+SMF may receive the service area information of the first service. The core network element 1 may include any one of the following: an MBSF network element, an MB-SMF network element, an NEF network element, a PCF network element, a UDM network element, and a UDR network element.

For example, the MBSF network element/the NEF network element may receive play range information of the first service that is sent by an AS, and further determine the service area information of the first service based on the play range information of the first service. Further, for example, the MBSF network element/the NEF network element may send the service area information of the first service to the PGW-C+SMF. In another example, the MBSF network element/the NEF network element may first send the service area information of the first service to the MB-SMF network element, and then the MB-SMF network element sends the service area information to the PGW-C+SMF. In another example, the MBSF network element/the NEF network element may first send the service area information of the first service to the PCF network element, and then the PCF network element sends the service area information to the PGW-C+SMF. In another example, the MBSF network element/the NEF network element may store the service area information of the first service in the UDR network element/the UDM network element, and then the UDR network element/the UDM network element sends the service area information to the PGW-C+SMF. In another example, the MBSF network element/the NEF network element may store the service area information of the first service in the UDR network element/the UDM network element, and the MB-SMF network element obtains the service area information of the first service from the UDR network element/the UDM network element and then send the service area information to the PGW-C+SMF.

For example, after receiving a join request (which requests to join a multi-cast session of the first service) sent by a terminal device, the PGW-C+SMF may request the service area information of the first service from the core network element 1, to further receive the service area information that is of the first service and that is sent by the core network element 1.

### (2) Implementation 2

The terminal device may send the service area information of the first service to the PGW-C+SMF, and then the PGW-C+SMF may receive the service area information of the first service. For example, before joining the multi-cast session of the first service, the terminal device may receive a service announcement sent by the AS or the MBSF network element, where the service announcement includes the service area information of the first service, so that the terminal device may send the service area information of the first service to the PGW-C+SMF.

In an example, when joining the multi-cast session of the first service, the terminal device may send the service area information of the first service to the PGW-C+SMF. In this case, the service area information of the first service and the join request may be carried in a same message, where the message may be a PDU session establishment request message or a PDU session modification request message.

In another example, after joining the multi-cast session of the first service, the terminal device may send the service area information of the first service to the PGW-C+SMF. In this case, the service area information of the first service may be carried in the PDU session modification request message.

S502: An AMF network element sends information about a target cell of the terminal device to the PGW-C+SMF. Correspondingly, the PGW-C+SMF may receive the information about the target cell.

For example, the information about the target cell may include a TAI corresponding to the target cell and/or an identifier of the target cell. Before sending the information about the target cell to the PGW-C+SMF, the AMF network element may first obtain the information about the target cell. For example, when the terminal device moves from a 5G network to the 4G network, a source access network element (that is, a gNB in the 5G network) of the terminal device may send a handover request to the AMF network element, where the handover request includes the information about the target cell. Further, the AMF network element may obtain the information about the target cell from the handover request.

There may be a plurality of implementations in which the AMF network element sends the information about the target cell to the PGW-C+SMF. The following describes two possible implementations.

### (1) Implementation 1

The AMF network element may actively send the information about the target cell to the PGW-C+SMF. For example, after obtaining the information about the target cell, if determining that the terminal device joins the multi-cast session of the first service, the AMF network element may determine a first PDU session associated with the first service, where the first PDU session is the PDU session of the terminal device, and send a session context request message to the PGW-C+SMF, where the session context request message may include the information about the target cell, and the session context request message is used to request a context of the first PDU session. It is to be noted that, in another possible embodiment, the AMF network element may alternatively not determine whether the terminal device joins the multi-cast session of the first service, and not determine the PDU session associated with the first service. The AMF network element may send the information about the target cell to a PGW-C+SMF corresponding to each PDU session that needs to be handed over.

There may be a plurality of manners in which the AMF network element determines the first PDU session associated with the first service. For example, in a process of joining the terminal device to the multi-cast session of the first service, the PGW-C+SMF may send an identifier of the multi-cast session of the first service to the AMF network element by using the first PDU session. The identifier of the multi-cast session of the first service may be an identifier corresponding to the first service transmitted in a third transmission manner (that is, a 5MBS transmission manner). After receiving the identifier of the multi-cast session of the first service, the AMF network element may establish an association relationship between the first service and the first PDU session, and then determine, based on the association relationship, the first PDU session associated with the first service. In another example, the AMF network element may obtain single network slice selection assistance information (single network slice selection assistance information, S-NSSAI) and/or a data network name (data network name, DNN) of the first service, and determine that a PDU session corresponding to the S-NSSAI and/or the DNN of the first service is the first PDU session associated with the first service. For example, the AMF network element may obtain the S-NSSAI and/or the DNN of the first service from the UDM network element.

In addition, in Implementation 1, after obtaining the information about the target cell, the AMF network element may unconditionally send the information about the target cell to the PGW-C+SMF. In other words, as long as the AMF obtains the information about the target cell, the AMF network element may send the information about the target cell to the PGW-C+SMF. Alternatively, after obtaining the information about the target cell, the AMF network element may conditionally send the information about the target cell to the PGW-C+SMF. In other words, after obtaining the information about the target cell, the AMF network element may determine whether a preset condition is met. If the preset condition is met, the AMF network element may send the information about the target cell to the PGW-C+SMF; or if the preset condition is not met, the AMF network element may no longer send the information about the target cell to the PGW-C+SMF. For example, after obtaining the information about the target cell, the AMF network element may determine whether the first service supports transmission through the 4G network. If the first service supports transmission through the 4G network, the AMF network element may send the information about the target cell to the PGW-C+SMF; or if the first service does not support transmission through the 4G network, the information about the target cell may no longer be sent to the PGW-C+SMF. There may be a plurality of specific implementations of determining, by the AMF network element, whether the first service supports the transmission through the 4G network. For example, the AMF network element may obtain subscription data of the first service, and then determine, based on the subscription data, whether the first service supports the transmission through the 4G network.

### (2) Implementation 2

The AMF network element may passively send the information about the target cell to the PGW-C+SMF. For example, the AMF network element may send the information about the target cell to the PGW-C+SMF based on a request or an indication of the PGW-C+SMF.

For example, after receiving the handover request sent by the source access network element, the AMF network element may send a session context request message to the PGW-C+SMF, where the session context request message is used to request a context of the first PDU session of the terminal device, and the session context request message does not include the information about the target cell. Correspondingly, after receiving the session context request message, the PGW-C+SMF may obtain the information about the target cell of the terminal device from the AMF network element. In a possible implementation, the PGW-C+SMF may determine whether the first service supports the transmission through the 4G network. If the first service supports the transmission through the 4G network, the PGW-C+SMF may obtain the information about the target cell of the terminal device from the AMF network element; or if the first service does not support transmission through the 4G network, the information about the target cell of the terminal device may no longer be obtained from the AMF network element.

It is to be noted that, the PGW-C+SMF may alternatively obtain the service area information of the first service after receiving the information about the target cell. In other words, S501 may be performed after S502.

S503. The PGW-C+SMF determines, based on the information about the target cell, whether the target cell is in a service area; and performs S504a and S505a if the target cell is not in the service area; or performs S504b and S505b if the target cell is in the service area.

The PGW-C+SMF may determine, based on the information about the target cell and the service area information, whether the target cell is in the service area. For example, the information about the target cell includes a TAI (for example, TAI-1) corresponding to the target cell, and the service area information includes TAIs corresponding to the service area (for example, TAI-1, TAI-2, and TAI-3). Because the TAIs corresponding to the service area include the TAI corresponding to the target cell, it may be determined that the target cell is in the service area.

It is to be noted that, if the PGW-C+SMF does not obtain the information about the target cell from the AMF network element (for example, the AMF network element does not support sending of the information about the target cell to the PGW-C+SMF), it may be considered that the target cell is not in the service area.

S504a: The PGW-C+SMF sends information 1, where the information 1 is for establishing a transmission path 1, and the transmission path 1 is for sending the data of the first service to the terminal device in a second transmission manner in the 4G network.

The transmission path 1 (that is, a transmission path corresponding to the second transmission manner) may be: AS → MB-UPF network element → PGW-U+UPF → SGW → eNB→ terminal device. The transmission path 1 includes a unicast bearer between the terminal device and the PGW-U+UPF. That the information 1 is for establishing a transmission path 1 may mean that the information 1 is for establishing the unicast bearer included in the transmission path 1. In an example, the information 1 may include a context of the unicast bearer, for example, QoS information of the unicast bearer and an identifier of the unicast bearer.

Before the PGW-C+SMF sends the information 1, the PGW-C+SMF may obtain the information 1. For example, the PGW-C+SMF may obtain information about a multicast QoS flow of the first service, and then determine information about a unicast QoS flow of the first service based on the information about the multicast QoS flow of the first service. Further, the SMF network element may map the unicast QoS flow of the first service to the unicast bearer, and obtain the identifier of the unicast bearer (for example, obtain the identifier of the unicast bearer from the AMF network element), so that information 1 can be obtained. Alternatively, the PGW-C+SMF may directly map the multicast QoS flow of the first service to the unicast bearer, and obtain the identifier of the unicast bearer, to obtain the information 1.

It may be understood that, a timing for the PGW-C+SMF to obtain the information 1 is not limited in this embodiment of this application. For example, the PGW-C+SMF may obtain the information 1 in a process of joining the terminal device to the multi-cast session of the first service. Alternatively, the PGW-C+SMF may obtain the information 1 after determining that the target cell is not in the service area.

For example, that the PGW-C+SMF sends information 1 may mean that the PGW-C+SMF sends the information 1 to the AMF network element. For example, the PGW-C+SMF sends a session context response message to the AMF network element. The session context response message includes a context of the first PDU session, and the context of the first PDU session includes the information 1. Correspondingly, after receiving the information 1, the AMF network element may send the information 1 to an MME in the 4G network in a handover procedure, and then the MME may establish a unicast bearer in the 4G network based on the information 1.

In addition, before being handed over to the 4G network, if the terminal device receives the data of the first service in a shared MBS transmission manner of the third transmission manner (that is, the SMBS transmission manner) of the 5G network, the PGW-C+SMF may further trigger establishment of a tunnel from the MB-UPF network element to the PGW-U+UPF, and notify, when receiving the data of the first service from the MB-UPF network element, the PGW-U+UPF to map the data of the first service to the unicast bearer and send the data to the terminal device.

Specifically, in an example, after the terminal device is handed over to the 4G network, the PGW-C+SMF may receive a session update request message (for example, receive the session update request message from the SGW or the MME). After receiving the session update request message, the PGW-C+SMF may notify, when receiving the data of the first service from the MB-UPF network element, the PGW-U+UPF to map the data of the first service to the unicast bearer and send the data to the terminal device. If the tunnel between the MB-UPF network element and the PGW-U+UPF has not been established, the PGW-C+SMF may further trigger establishment of the tunnel from the MB-UPF network element to the PGW-U+UPF.

S505a: After the terminal device is handed over to the 4G network, the AS may send the data of the first service to the terminal device through the transmission path 1. Correspondingly, the terminal device receives the data of the first service through the transmission path 1.

S504b: The PGW-C+SMF skips sending the information 1.

That the PGW-C+SMF skips sending the information 1 may mean that the PGW-C+SMF may not send the information 1 to the AMF network element. For example, the PGW-C+SMF sends a session context response message to the AMF network element. The session context response message includes a context of the first PDU session, and the context of the first PDU session does not include the information 1. Because the AMF network element does not receive the information 1, the AMF network element may not send the information 1 to the MME in the 4G network in the handover procedure, and the MME may no longer establish the unicast bearer for the terminal device.

S505b: After the terminal device is handed over to the 4G network, the AS may send the data of the first service to the terminal device through a transmission path 2. Correspondingly, the terminal device receives the data of the first service through the transmission path 2.

The transmission path 2 (that is, a transmission path corresponding to the first transmission manner) may be: AS → MBSF network element → MBMS-GW → eNB → terminal device.

Because the target cell is in the service area, information broadcast on a broadcast channel of the target cell may include a TMGI corresponding to the first service and configuration information of the first service. After being handed over to the target cell, the terminal device may listen to the broadcast channel of the target cell based on the pre-obtained TMGI corresponding to the first service, and may further receive the data of the first service based on the configuration information of the first service through the transmission path 2. The configuration information of the first service may be for determining a resource that carries the data of the first service. For example, the TMGI corresponding to the first service may be pre-obtained by the terminal device from the AS, or may be pre-obtained by the terminal device from the MBSF network element. This is not specifically limited.

For example, because the terminal device may receive the data of the first service through the transmission path 2, the PGW-C+SMF may release or delete a resource that is in the 5G network and that is for sending the data of the first service to the terminal device. For example, the PGW-C+SMF may delete multi-cast information of the first service, for example, delete the identifier of the multi-cast session of the first service and the information about the multi-cast QoS flow. Optionally, if a unicast QoS flow corresponding to the multi-cast QoS flow exists, the PGW-C+SMF may also delete information about the unicast QoS flow. Further, if the terminal device is the last terminal device in the multi-cast session of the first service, the PGW-C+SMF may further delete a session between the PGW-C+SMF and the MB-SMF network element. If the terminal device receives the data of the first service in the individual MBS transmission manner of the third transmission manner before the terminal device is handed over to the 4G network, the PGW-C+SMF may further delete a configuration of the PGW-U+UPF, so that the PGW-U+UPF stops copying the data of the first service to a tunnel corresponding to the first PDU session for sending. If the terminal device is the last terminal device that receives the data of the first service in the individual MBS transmission manner through the PGW-U+UPF, the PGW-C+SMF may further notify the MB-SMF network element to delete the tunnel from the MB-UPF network element to the PGW-U+UPF.

According to the foregoing method, the PGW-C+SMF may determine, based on the service area information of the first service and the information about the target cell of the terminal device, whether the target cell is in the service area, and then perform different processing based on whether the target cell is in the service area. For example, if the target cell is not in the service area, the PGW-C+SMF may send the information 1, and then an AS may send the data of the first service to the terminal device in the second transmission manner in the 4G network; or if the target cell is in the service area, the PGW-C+SMF may skip sending the information 1, and the AS may send the data of the first service to the terminal device in the first transmission manner (that is, an eMBMS transmission manner) in the 4G network.

It is to be noted that, in the procedure described in Embodiment 1, if the target cell is in the service area, the PGW-C+SMF may skip sending the information 1. In another possible implementation, if the target cell is in the service area, the PGW-C+SMF may also send the information 1, and then the AS may send the data of the first service to the terminal device in the second transmission manner in the 4G network. Related implementation when the target cell is in the service area may not be limited in this embodiment of this application.

### Embodiment 2

In Embodiment 2, a possible implementation procedure of the communication method is described by using a network architecture shown in FIG. 3 as an example.

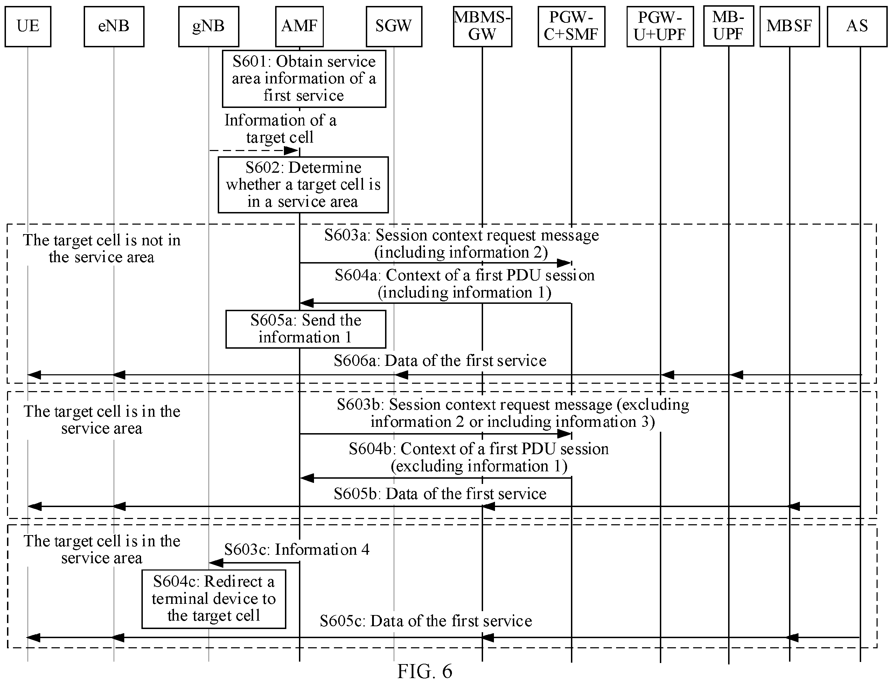

FIG. 6 is a schematic flowchart corresponding to a communication method according to Embodiment 2 of this application. As shown in FIG. 6, the procedure may include the following steps.

S601: An AMF network element obtains service area information of a first service, where the service area information indicates a service area in which the first service is transmitted in a first transmission manner (that is, an eMBMS transmission manner) in a 4G network.

There may be a plurality of implementations in which the AMF network element obtains the service area information of the first service. For example, the AMF network element may receive the service area information of the first service from a core network element 2, and the core network element 2 may include any one of the following: a PGW-C+SMF, an MBSF network element, an MB-SMF network element, an NEF network element, a UDM network element, and a UDR network element.

For example, the MBSF network element/the NEF network element may receive play range information of the first service that is sent by an AS, and further determine the service area information of the first service based on the play range information of the first service. Further, for example, the MBSF network element/the NEF network element may send the service area information of the first service to the AMF network element. In another example, the MBSF network element/the NEF network element may send the service area information of the first service to the PGW-C+SMF, and then the PGW-C+SMF sends the service area information of the first service to the AMF network element. In another example, the MBSF network element/the NEF network element may send the service area information of the first service to the MB-SMF network element, and then the MB-SMF network element sends the service area information to the AMF network element. In another example, the MBSF network element/the NEF network element may store the service area information of the first service in the UDR network element/the UDM network element, and then the UDR network element/the UDM network element sends the service area information to the AMF network element. In another example, the MBSF network element/the NEF network element may store the service area information of the first service in the UDR network element/the UDM network element, and the MB-SMF network element obtains the service area information of the first service from the UDR network element/the UDM network element and then send the service area information to the AMF network element.

S602: The AMF network element determines, based on the information about the target cell, whether the target cell is in the service area; and if the target cell is not in the service area, performs S603a to S606a; or if the target cell of the terminal device is in the service area, performs S603b to S605b or performs S603c to S605c.

The AMF network element may obtain the information about the target cell, and then determine, based on the information about the target cell and the service area information, whether the target cell is in the service area. For example, when the terminal device moves from a 5G network to the 4G network, a source access network element (that is, a gNB in the 5G network) of the terminal device may send a handover request to the AMF network element, where the handover request includes the information about the target cell. Further, the AMF network element may obtain the information about the target cell from the handover request.

S603a: The AMF network element sends a session context request message to the PGW-C+SMF, where the session context request message includes information 2, and the information 2 indicates to send the data of the first service to the terminal device in the second transmission manner in the 4G network.

For example, if determining that the terminal device joins the multi-cast session of the first service, the AMF network element may determine a first PDU session associated with the first service, where the first PDU session is the PDU session of the terminal device, and then send the session context request message to the PGW-C+SMF, where the session context request message is used to request a context of the first PDU session. For related implementation of determining, by the AMF network element, the first PDU session associated with the first service, refer to the descriptions in Embodiment 1.

It is to be noted that, the information 2 indicates to send the data of the first service to the terminal device in the second transmission manner in the 4G network, which may alternatively be replaced with another possible description. For example, the information 2 indicates that the target cell of the terminal device is not in the service area, or the information 2 indicates to obtain information 1. This is not specifically limited.

S604a: The PGW-C+SMF receives the session context request message, and sends the context of the first PDU session to the AMF network element based on the information 2, where the context of the first PDU session includes the information 1.

S605a: The AMF network element sends information 1, where the information 1 is for establishing a transmission path 1, and the transmission path 1 is for sending the data of the first service to the terminal device in a second transmission manner in the 4G network. For the transmission path 1, refer to the descriptions in Embodiment 1.

For example, that the AMF network element sends information 1 may mean that the AMF network element sends the information 1 to an MME in the 4G network in a handover procedure, and then the MME may establish, in the 4G network based on the information 1, the unicast bearer included in the transmission path 1.

S606a: After the terminal device is handed over to the 4G network, the AS sends the data of the first service to the terminal device through a transmission path 1. Correspondingly, the terminal device receives the data of the first service through the transmission path 1.

S603b: The AMF network element sends a session context request message to the PGW-C+SMF, where the session context request message does not include information 2, or the session context request message includes information 3, where the information 3 indicates to send the data of the first service to the terminal device in the first transmission manner (that is, the eMBMS transmission manner) in the 4G network.

It is to be noted that, the information 3 indicates to send the data of the first service to the terminal device in the first transmission manner in the 4G network, which may alternatively be replaced with another possible description. For example, the information 3 indicates that the target cell of the terminal device is in the service area, or the information 3 indicates to obtain information 1. This is not specifically limited.

S604b: The PGW-C+SMF sends the context of the first PDU session to the AMF network element, where the context of the first PDU session does not include the information 1. Correspondingly, the AMF network element may receive the context of the first PDU session.

In this case, because the AMF network element does not receive the information 1, the AMF network element may skip sending the information 1. That the AMF network element skips sending the information 1 may mean that the AMF does not send the information 1 to the MME in the 4G network in the handover procedure, and the MME may no longer establish the unicast bearer for the terminal device.

For example, the PGW-C+SMF may release or delete a resource that is in the 5G network and that is for sending the data of the first service to the terminal device. For details, refer to the descriptions in Embodiment 1.

S605b: After the terminal device is handed over to the 4G network, the AS sends the data of the first service to the terminal device through a transmission path 2. Correspondingly, the terminal device receives the data of the first service through the transmission path 2. For the transmission path 2 (that is, a transmission path corresponding to the first transmission manner), refer to the description in Embodiment 1.

It is to be noted that, in the foregoing procedure, if the AMF network element determines that the target cell is not in the service area, the session context request message sent to the PGW-C+SMF may carry the information 2, and then the PGW-C+SMF may send the information 1 to the AMF network element. After receiving the information 1, the AMF network element may send the information 1. Alternatively, if the AMF network element determines that the target cell is in the service area, the session context request message sent to the PGW-C+SMF may not carry the information 2 or may carry the information 3, and then the PGW-C+SMF may skip sending the information 1 to the AMF network element. Because the AMF network element does not receive the information 1, the AMF network element may skip sending the information 1. In another possible embodiment, the AMF network element may send a session context request message to the PGW-C+SMF, and the PGW-C+SMF sends the information 1 to the AMF network element after receiving the session context request message. After receiving the information 1, the AMF network element may determine, based on whether the target cell is in the service area, whether to send the information 1.

S603c: The AMF network element sends information 4 to the source access network element (that is, the gNB in the 5G network) of the terminal device, where the information 4 is used to redirect the terminal device to the target cell.

S604c: The gNB redirects the terminal device to the target cell.

The gNB may notify the terminal device to access the target cell. Correspondingly, the terminal device may access the 4G network through the target cell. Further, when the terminal accesses the 4G network (for example, accesses the 4G network based on a tracking area update procedure), the MME requests a context of the terminal device from the AMF network element, and then the AMF network element may send a session context request message to the PGW-C+SMF based on the request of the MME. The session context request message may not carry the information 2 or may carry the information 3, so that PGW-C+SMF may skip sending the information 1 to the AMF network element, or the AMF network element may also skip sending the information 1 to the MME, and the unicast bearer may not be established in the 4G network.

For example, after receiving the session context request message, the PGW-C+SMF may release or delete a resource that is in the 5G network and that is for sending the first service to the terminal device. For details, refer to the descriptions in Embodiment 1.

S605c: The AS sends the data of the first service to the terminal device through the transmission path 2. Correspondingly, the terminal device receives the data of the first service through the transmission path 2.

Because the target cell is in the service area, information broadcast on a broadcast channel of the target cell may include a TMGI corresponding to the first service and configuration information of the first service. After accessing the target cell, the terminal device may listen to the broadcast channel of the target cell based on the pre-obtained TMGI corresponding to the first service, and may further receive the data of the first service based on the configuration information of the first service through the transmission path 2.

According to the foregoing method, the AMF network element may determine, based on the service area information of the first service and the information about the target cell of the terminal device, whether the target cell is in the service area, and then perform different processing based on whether the target cell is in the service area. For example, if the target cell is not in the service area, the AMF network element may send the information 1, and then the AS may send the data of the first service to the terminal device in the second transmission manner in the 4G network; or if the target cell is in the service area, the AMF network element may skip sending the information 1, and the AS may send the data of the first service to the terminal device in the first transmission manner (that is, the eMBMS transmission manner) in the 4G network.

### Embodiment 3

In Embodiment 3, a possible implementation procedure of the communication method is described by using a network architecture shown in FIG. 3 as an example.

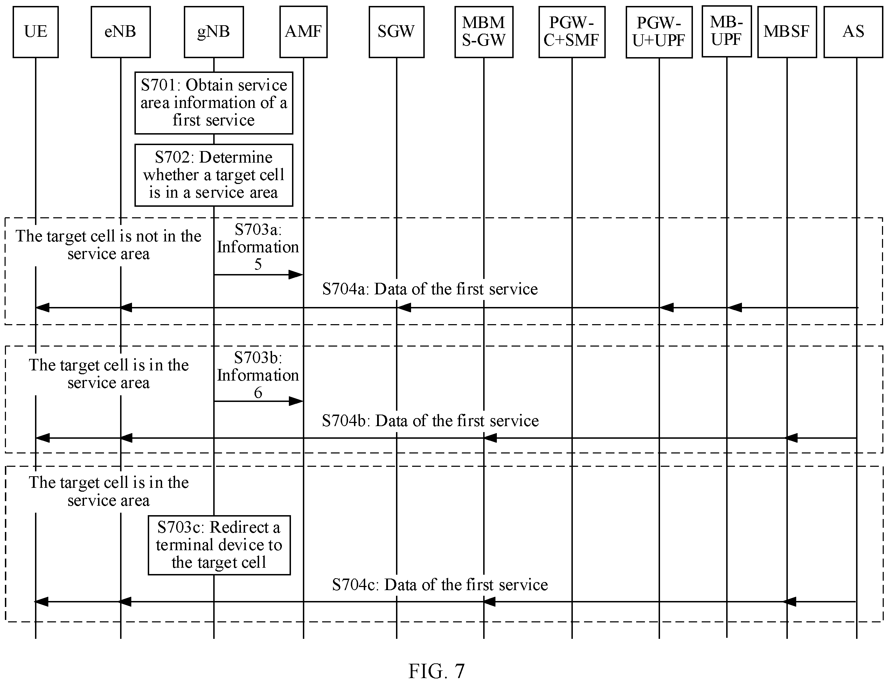

FIG. 7 is a schematic flowchart corresponding to a communication method according to Embodiment 3 of this application. As shown in FIG. 7, the procedure may include the following steps.

S701: A source access network element (that is, a gNB in a 5G network) of the terminal device obtains service area information of a first service, where the service area information indicates a service area in which the first service is transmitted in a first transmission manner (that is, an eMBMS transmission manner) in a 4G network.

The gNB may obtain the service area information of the first service in a plurality of manners. The following describes two possible implementations.

### (1) Implementation 1

A core network element 3 may send the service area information of the first service to the gNB, and then the gNB may receive the service area information of the first service. The core network element 3 may include any one of the following: a PGW-C+SMF, an AMF network element, and an MB-SMF network element.

For example, the PGW-C+SMF or AMF network element may send the service area information of the first service to the gNB when requesting the gNB to join the terminal device to a multi-cast session of the first service. In another example, the MB-SMF network element may send the service area information of the first service to the gNB when the gNB establishes the multi-cast session of the first service. Specifically, after receiving the request for joining the terminal device to the multi-cast session of the first service, the gNB may send a request message to the MB-SMF network element to establish the multi-cast session of the first service. Further, the MB-SMF network element may send the service area information of the first service to the gNB by using a response message. For implementation of obtaining, by the PGW-C+SMF, the AMF network element, or the MB-SMF network element, the service area information of the first service, refer to the descriptions in Embodiment 1 or Embodiment 2.

For example, when the AMF network element sends the service area information of the first service to the gNB, the AMF network element may first tailor the service area information of the first service to obtain tailored service area information, and send the tailored service area information to the gNB. The tailored service area information may indicate a first service area that supports transmission of the first service in the eMBMS transmission manner in the 4G network, and the first service area may be an area that is in the service area and that is adjacent to the gNB. In this manner, a size of information sent to the gNB can be reduced, thereby saving transmission resources.

### (2) Implementation 2

The terminal device may send the service area information of the first service to the gNB, and then the gNB may receive the service area information of the first service. For example, the terminal device may send a radio resource control (radio resource control, RRC) message to the gNB, where the RRC message includes the service area information of the first service.

S702: The gNB determines whether a target cell of the terminal device is in a service area; and if the target cell is not in the service area, performs S703 a to S704a; or if the target cell is in the service area, performs S703b to S704b or performs S703c to S704c.

S703a: The gNB sends information 5, where the information 5 indicates to send the data of the first service to the terminal device in a second transmission manner in the 4G network, or the information 5 indicates to allocate a radio resource for the first service in the 4G network, where the radio resource is used to send the data of the first service to the terminal device in the second transmission manner in the 4G network, or the information 5 indicates to hand over the first service to the 4G network (for example, the first service is handed over to the 4G network in a handover procedure).

In a possible implementation, the gNB may send information 5 (for example, carried in a handover request) to the AMF network element. After receiving the information 5, the AMF network element may obtain information 2 (for the information 2, refer to the descriptions in Embodiment 2) based on the information 5, and send a session context request message to the PGW-C+SMF, where the session context request message carries the information 2. Further, the PGW-C+SMF may send the information 1 to the AMF network element. After receiving the information 1, the AMF network element may send the information 1 to an MME in the 4G network in a handover procedure, and then the MME may establish, in the 4G network based on the information 1, the unicast bearer included in the transmission path 1.

In still another possible implementation, the gNB may send the information 5 to the PGW-C+SMF through the AMF network element (in this case, the AMF network element performs a forwarding function, and may not parse the information 5), for example, the information 5 may be carried in an N2 SM message. Further, after receiving the session context request message (where the session context request message includes the information 5) sent by the AMF network element, the PGW-C+SMF may send the information 1 to the AMF network element based on the information 5. After receiving the information 1, the AMF network element may send the information 1 to an MME in the 4G network in a handover procedure, and then the MME may establish, in the 4G network based on the information 1, the unicast bearer included in the transmission path 1.

For example, the information 5 may include an identifier of a multi-cast session of the first service and/or indication information (for example, the indication information may indicate the second transmission manner in the 4G network). For example, when the first PDU session is associated only with the first service, the information 5 may include the indication information, but does not include the identifier of the multi-cast session of the first service.

S704a: After the terminal device is handed over to the 4G network, the AS sends the data of the first service to the terminal device through the transmission path 1. Correspondingly, the terminal device receives the data of the first service through the transmission path 1.

S703b: The gNB sends information 6, where the information 6 is for sending the data of the first service to the terminal device in the first transmission manner (that is, the eMBMS transmission manner) in the 4G network, or the information 6 indicates not to allocate a radio resource for the first service in the 4G network, where the radio resource is used to send the data of the first service to the terminal device in the second transmission manner in the 4G network, or the information 6 indicates not to hand over the first service to the 4G network (for example, the first service is not handed over to the 4G network in a handover procedure).

In a possible implementation, the gNB may send information 6 (for example, carried in a handover request) to the AMF network element. After receiving the information 6, the AMF network element may obtain information 3 based on the information 6, and send a session context request message to the PGW-C+SMF, where the session context request message carries the information 3. Further, the PGW-C+SMF may skip sending the information 1 to the AMF network element. Because the AMF network element does not receive the information 1, the AMF network element may not send the information 1 to the MME in the 4G network in the handover procedure, and the MME may not establish, in the 4G network, the unicast bearer included in the transmission path 1.

In still another possible implementation, the gNB may send the information 6 to the PGW-C+SMF through the AMF network element (in this case, the AMF network element performs a forwarding function, and may not parse the information 6), for example, the information 6 may be carried in an N2 SM message. Further, after receiving the session context request message (where the session context request message includes the information 5) sent by the AMF network element, the PGW-C+SMF may skip sending the information 1 to the AMF network element based on the information 6. Because the AMF network element does not receive the information 1, the AMF network element may not send the information 1 to the MME in the 4G network in the handover procedure, and the MME may not establish, in the 4G network, the unicast bearer included in the transmission path 1.

For example, the information 6 may include an identifier of a multi-cast session of the first service and/or indication information (for example, the indication information may indicate the first transmission manner in the 4G network). For example, when the first PDU session is associated only with the first service, the information 6 may include the indication information, but does not include the identifier of the multi-cast session of the first service.

For example, in the two implementations, the PGW-C+SMF may release or delete a resource that is in the 5G network and that is for sending the data of the first service to the terminal device. For details, refer to the descriptions in Embodiment 1.

S704b: After the terminal device is handed over to the 4G network, the AS sends the data of the first service to the terminal device through the transmission path 2. Correspondingly, the terminal device receives the data of the first service through the transmission path 2.

S703c: The gNB redirects the terminal device to the target cell.

For example, for related implementation of S703c, refer to the descriptions of S604c in Embodiment 2.

S704c: The AS sends the data of the first service to the terminal device through the transmission path 2. Correspondingly, the terminal device receives the data of the first service through the transmission path 2.

According to the foregoing method, the source access network element of the terminal device may determine, based on the service area information of the first service and the information about the target cell of the terminal device, whether the target cell is in the service area, and then perform different processing based on whether the target cell is in the service area. For example, if the target cell is not in the service area, the source access network element may send the information 5, and then the AS may send the data of the first service to the terminal device in the second transmission manner in the 4G network; or if the target cell is in the service area, the source access network element may redirect the terminal device to the target cell or send the information 6, and the AS may send the data of the first service to the terminal device in the first transmission manner (that is, the eMBMS transmission manner) in the 4G network.

A scenario to which Embodiment 4 and Embodiment 5 are applicable may be as follows: For example, in the network architecture (where the 4G network and the 5G network coexist) shown in FIG. 3, the terminal device moves from the 4G network to the 5G network, and before the terminal device moves from the 4G network to the 5G network, the terminal device may be in a connected state. Further, the terminal device may access the 5G network in a handover procedure. Alternatively, before the terminal device moves from the 4G network to the 5G network, the terminal device may be in an idle state, and then the terminal device may access the 5G network from the idle state. In another example, in the network architecture shown in FIG. 2, the terminal device may access the 5G network for the first time.

After the terminal device accesses the 5G network, the gNB does not broadcast the TMGI of the first service and the configuration information of the first service (where the eNB in the 4G network may broadcast the TMGI of the first service and the configuration information of the first service) Therefore, the terminal device needs to join the multi-cast session of the first service, to obtain the configuration information of the first service, and then receive the data of the first service based on the configuration information of the first service.

However, there may be some PLMNs in the 5G network that do not support sending of the data of the first service in the SMBS transmission manner, but the terminal device does not know whether a currently accessed PLMN supports the sending of the data of the first service in the 5MBS transmission manner. As a result, the terminal device cannot determine whether to join the multi-cast session of the first service.

Based on this, this application provides Embodiment 4 and Embodiment 5, to determine whether a PLMN currently accessed by the terminal device supports the sending of the data of the first service in the 5MBS transmission manner, and send the data of the first service to the terminal device in an appropriate manner after the terminal device accesses the 5G network.

### Embodiment 4

In Embodiment 4, a possible implementation procedure of the communication method is described by using a network architecture shown in FIG. 3 as an example. It is to be noted that, Embodiment 4 is also applicable to the network architecture shown in FIG. 2.

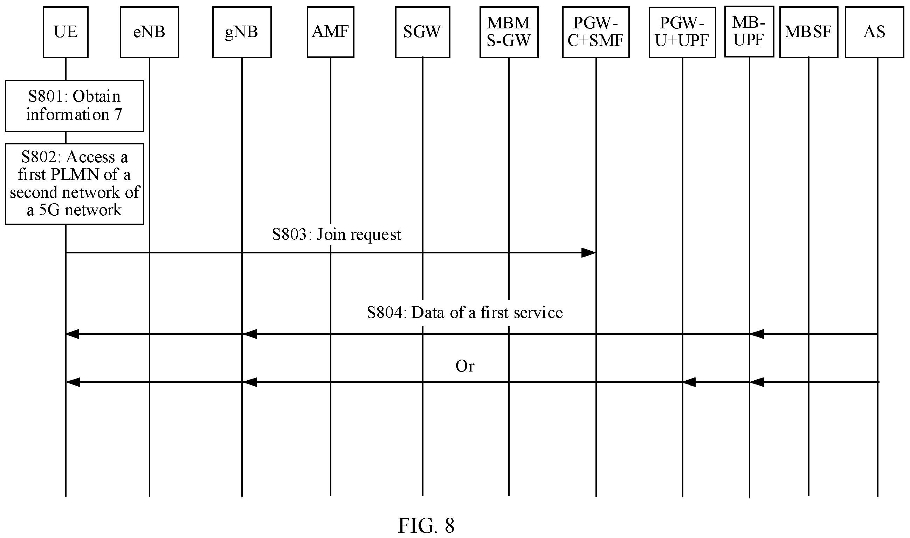

FIG. 8 is a schematic flowchart corresponding to a communication method according to Embodiment 4 of this application. As shown in FIG. 8, the procedure may include the following steps.

S801: The terminal device obtains information 7, where the information 7 indicates a network that supports sending data of a first service in a third transmission manner (that is, a 5MBS transmission manner).

For example, the information 7 may include identifiers of one or more networks, and the one or more networks support sending of the data of the first service in the 5MBS transmission manner. The one or more networks may be one or more PLMNs in the 5G network, and the one or more PLMNs include a first PLMN. Optionally, the information 7 may further include a DNN and/or S-NSSAI corresponding to each of the one or more networks.

The terminal device may obtain the information 7 in a plurality of manners. For example, the terminal device may receive a service announcement of the first service sent by an AS or an MBSF network element, where the service announcement includes the information 7.

S802: The terminal device accesses the first PLMN in the 5G network.

That the terminal device accesses the first PLMN in the 5G network may include the following several cases. Case 1: For example, in the network architecture (when the 4G network and the 5G network coexist) shown in FIG. 3, the terminal device moves from the 4G network to the 5G network, and before the terminal device moves from the 4G network to the 5G network, the terminal device may be in a connected state. Further, the terminal device may access the first PLMN in the 5G network in a handover procedure. Alternatively, before the terminal device moves from the 4G network to the 5G network, the terminal device may be in an idle state, and then the terminal device may access the first PLMN in the 5G network from the idle state. Case 2: For example, in the network architecture shown in FIG. 2, the terminal device accesses the first PLMN in the 5G network for the first time.

S803: The terminal device sends a join request to a network element (for example, a PGW-C+SMF) in the first PLMN based on the information 7, where the join request is used to request to join a multi-cast session of the first service; or the join request is used to request to send the data of the first service to the terminal device in the 5MBS transmission manner in the second network.

For example, the terminal device may send the join request to the network element in the first PLMN by using a first PDU session of the terminal device, where a DNN and/or S-NSSAI corresponding to the first PDU session are/is the same as a DNN and/or S-NSSAI corresponding to the first PLMN. The terminal device may determine the first PDU session based on the DNN and/or the S-NSSAI corresponding to the first PLMN.

S804: The AS sends the data of the first service to the terminal device through a transmission path 3 (that is, a transmission path corresponding to the third transmission manner). Correspondingly, the terminal device receives the data of the first service through the transmission path 3.

In addition, if the gNB accessed by the terminal device supports a 5MBS, the data of the first service is sent to the terminal device in the shared MBS transmission manner in the third transmission manner, and a corresponding transmission path 3 may be: AS → MB-UPF → gNB → terminal device. If the gNB accessed by the terminal device does not support a 5G MBS, the data of the first service is sent to the terminal device in the individual MBS transmission manner in the third transmission manner, and a corresponding transmission path 3 may be: AS → MB-UPF - PGW-U+UPF → gNB → terminal device.

By using the foregoing method, the terminal device may determine, based on the information 7, whether a network accessed by the terminal device supports sending the data of the first service in the SMBS transmission manner. If the network supports sending the data of the first service in the third transmission manner, the terminal device may send a join request to join a multi-cast session of the first service; or if the network does not support sending of the data of the first service in the third transmission manner, the terminal device may skip sending a join request, so that after accessing the 5G network, the terminal device may determine, based on the foregoing determining, whether to send the join request, to receive the data of the first service in an appropriate manner.

### Embodiment 5

In Embodiment 5, a possible implementation procedure of the communication method is described by using a network architecture shown in FIG. 3 as an example. It is to be noted that, Embodiment 5 is also applicable to the network architecture shown in FIG. 2.

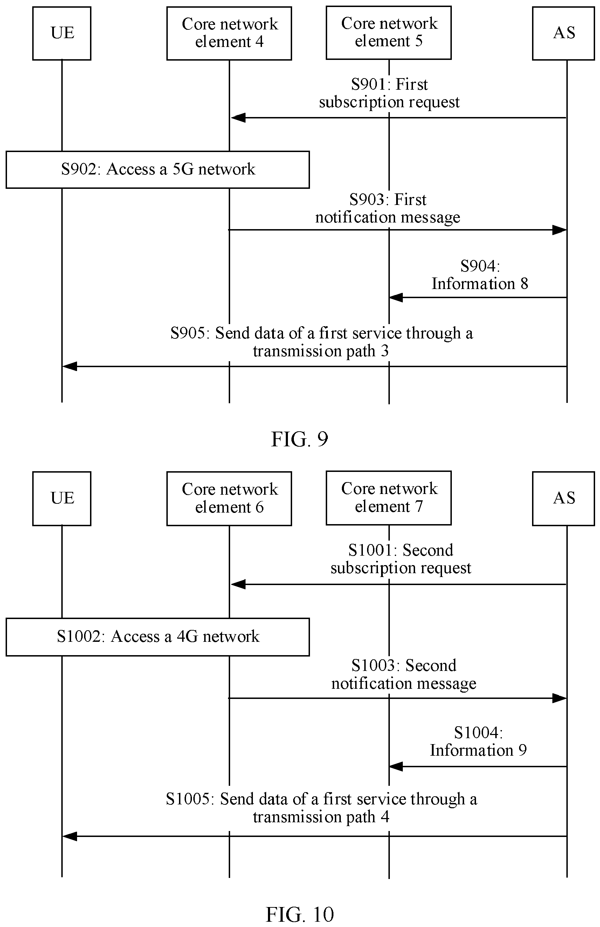

FIG. 9 is a schematic flowchart corresponding to a communication method according to Embodiment 5 of this application. As shown in FIG. 9, the procedure may include the following steps.

S901: An MBSF network element or an AS sends a first subscription request to a core network element 4, where the first subscription request is used to request the core network element 4 to send a first notification message after a terminal device accesses a 5G network.

The first subscription request may include an identifier of the terminal device, and the identifier of the terminal device may be an IP address of the terminal device or a generic public subscription identifier (generic public subscription identifier, GPSI).

For example, in the network architecture shown in FIG. 3, the core network element 4 may be an AMF network element, a PGW-C+SMF, or a PCF network element. In the network architecture shown in FIG. 2, the core network element 4 may be an AMF network element, an SMF network element, or a PCF network element. For example, the MBSF network element or the AS may send the first subscription request to the core network element 4 through an NEF network element.

For example, the AS is used as an example. After determining that the terminal device needs to receive data of a first service, the AS may send the first subscription request to the core network element 4. For example, the terminal device may send a service request to the AS, where the service request is used to request to receive the data of the first service. Further, after receiving the service request, the AS may determine that the terminal device needs to receive the data of the first service. Further, the terminal device may indicate first capability information of the terminal device to the AS, that is, whether access to the 4G network and/or the 5G network is supported, and the AS may send the first subscription request based on the first capability information of the terminal device. For example, if the first capability information of the terminal device indicates that the terminal device supports access to the 5G network, the AS may send the first subscription request; or if the first capability information of the terminal device indicates that the terminal device does not support access to the 5G network, the AS may skip sending the first subscription request.

The terminal device may send the service request to the AS in a plurality of manners. For example, the terminal device may send the service request to the AS by using a first session of the terminal device. The first session may be a PDU session of the terminal device or a PDN connection of the terminal device.

S902: The terminal device accesses the 5G network.

That the terminal device accesses the 5G network may include the following several cases. Case 1: For example, in the network architecture (when the 4G network and the 5G network coexist) shown in FIG. 3, the terminal device moves from the 4G network to the 5G network, and before the terminal device moves from the 4G network to the 5G network, the terminal device may be in a connected state. Further, the terminal device may access the 5G network in a handover procedure. Alternatively, before the terminal device moves from the 4G network to the 5G network, the terminal device may be in an idle state, and then the terminal device may access the 5G network from the idle state. Case 2: For example, in the network architecture shown in FIG. 2, the terminal device accesses the 5G network for the first time.

It is to be noted that, S901 may be performed before S902, or S901 may be performed after S902. This is not specifically limited.

S903: The core network element 4 sends a first notification message to the MBSF network element or the AS, where the first notification message indicates the terminal device to access the 5G network. Correspondingly, the MBSF network element or the AS may receive the first notification message.

For example, if the terminal device accesses a second PLMN in the 5G network, the first notification message may include an identifier of the second PLMN.

It is to be noted that, if S902 is performed before S901, S903 may be a response message of S901, that is, the AS is notified, in the response message of the first subscription request, that the terminal device accesses the second PLMN in the 5G network.

S904: The MBSF network element or the AS sends information 8 to a core network element 5, where the information 8 indicates to send the data of the first service to the terminal device in a third transmission manner (5MBS transmission manner) in the 5G network. For example, the information 8 may include an identifier of a multi-cast session of the first service.

After receiving the first notification message, the MBSF network element or the AS may determine, based on the identifier of the second PLMN, whether the second PLMN supports sending of the data of the first service in the SMBS transmission manner. If the second PLMN supports the sending of the data of the first service in the 5MBS transmission manner, the MBSF network element or the AS may send the information 8 to the core network element 5. After receiving the information 8, the core network element 5 may join the terminal device to the multi-cast session of the first service. If the second PLMN does not support sending of the data of the first service in the SMBS transmission manner, the MBSF network element or the AS may not indicate to join the terminal device to the multi-cast session of the first service.

For example, the core network element 5 may be a PCF network element, an MB-SMF network element, an NEF network element, or an MBSF network element. The AS is used as an example. In an example, the AS may send the information 8 to the core network element 5 through the NEF network element. In still another example, the AS may send the information 8 to the core network element 5 by using an application policy session or an application function session (that is, an AF session) corresponding to a PDU session associated with the first service.

For example, after receiving the information 8 from the AS, the core network element 5 may notify the SMF network element (or the PGW-C+SMF) corresponding to the PDU session associated with the first service to join the terminal device to the multi-cast session of the first service. (1) When the AS sends the information 8 to the core network element 5 by using the application policy session corresponding to the PDU session associated with the first service, the core network element 5 is a PCF network element, and in this case, the PCF network element may notify, by using the application policy session corresponding to the PDU session, an SMF network element corresponding to the PDU session to join the terminal device to the multi-cast session of the first service. (2) When the AS sends the information 8 to the core network element 5 by using an NEF, the information 8 may carry information of the terminal device, and the core network element 5 may be a PCF network element or an SMF network element. For example, the information about the terminal device is an IP address of the terminal device, and the NEF network element may determine, based on the IP address of the terminal device, a PCF network element or an SMF network element serving the PDU session corresponding to the IP address of the terminal device, to further notify (directly notify or notify through the PCF network element) the SMF network element serving the PDU session to join the terminal device to the multi-cast session of the first service.

In addition, when the SMF network element is notified to join the terminal device to the multi-cast session of the first service, the core network element 5 may send the identifier of the multi-cast session of the first service to the SMF network element. For a process in which the SMF network element joins the terminal device to the multi-cast session of the first service, refer to the conventional technology. Details are not described herein again.

S905: The AS sends the data of the first service to the terminal device through the transmission path 3. Correspondingly, the terminal device receives the data of the first service through the transmission path 3.

For example, for implementation of S905, refer to the descriptions of S804 in Embodiment 4.

According to the foregoing method, the AS may determine whether the network accessed by the terminal device supports sending of the data of the first service in the SMBS transmission manner. If the network supports the sending the data of the first service in the SMBS transmission manner, the AS may indicate the core network element to join the terminal device to the multi-cast session of the first service. If the network does not support sending the data of the first service in the 5MBS transmission manner, the AS may not indicate to join the terminal device to the multi-cast session of the first service, so that the terminal device can send the data of the first service to the terminal device in an appropriate manner after accessing the 5G network.

Scenarios applicable to Embodiment 6 may include the scenarios applicable to Embodiment 1 to Embodiment 3. For details, refer to the foregoing descriptions.

### Embodiment 6

In Embodiment 6, a possible implementation procedure of the communication method is described by using a network architecture shown in FIG. 3 as an example.

FIG. 10 is a schematic flowchart corresponding to a communication method according to Embodiment 6 of this application. As shown in FIG. 10, the procedure may include the following steps.

S1001: An MBSF network element or an AS sends a second subscription request to a core network element 6, where the second subscription request is used to request the core network element 6 to send a second notification message after a terminal device accesses a 4G network.

The second subscription request may include an identifier of the terminal device, and the identifier of the terminal device may be an IP address of the terminal device or a GPSI.

For example, in the network architecture shown in FIG. 3, the core network element 6 may be an MME network element, a PGW-C+SMF, or a PCF network element. In the network architecture shown in FIG. 1, the core network element 6 may be an MME network element, or a PCF network element.

For example, the AS is used as an example. After determining that the terminal device needs to receive data of a first service, the AS may send the second subscription request to the core network element 6. For example, the terminal device may send a service request to the AS, where the service request is used to request to receive the data of the first service. Further, after receiving the service request, the AS may determine that the terminal device needs to receive the data of the first service. Further, the terminal device may indicate first capability information of the terminal device to the AS, that is, whether access to the 4G network and/or the 5G network is supported, and the AS may send the second subscription request based on the first capability information of the terminal. For example, if the first capability information of the terminal device indicates that the terminal device supports access to the 4G network, the AS may send the second subscription request; or if the first capability information of the terminal device indicates that the terminal device does not support access to the 4G network, the AS may skip sending the second subscription request. For a manner in which the terminal device sends the service request to the AS, refer to the descriptions in Embodiment 1.

S1002: The terminal device accesses the 4G network.

For example, when moving from the 5G network to the 4G network, the terminal device may access the 4G network in an attach procedure or a tracking area update procedure, or may be handed over to the 4G network in a handover procedure.

It is to be noted that, S1001 may be performed before S1002, or S1001 may be performed after S1002. This is not specifically limited.

S1003: The core network element 6 sends a second notification message to the MBSF network element or the AS, where the second notification message indicates the terminal device to access the 4G network. Correspondingly, the MBSF network element or the AS may receive the second notification message.

It is to be noted that, if S1002 is performed before S1001, S1003 may be a response message of S1001, that is, the AS is notified, in the response message of the second subscription request, that the terminal device accesses the 4G network.

It is to be noted that, if the terminal device is handed over to the 4G network in the handover procedure, the core network element 6 may send the second notification message after the handover is completed, or send the second notification message during the handover. For example, the sending the second notification message during the handover may be sending the second notification message in a handover preparation phase (for example, the AMF network element sends the second notification message after receiving a handover request message), or sending the second notification message in a handover completion phase (for example, the SMF+PGW-C sends the second notification message after receiving a path handover notification). For example, the core network element 6 may be an SMF+PGW-C, and the second notification message may be directly sent to the AS, or may be sent to the AS through the PCF network element and/or the NEF network element.

Alternatively, the core network element 6 may send the second notification message before the terminal device is handed over, for example, may send the second notification message after learning that the terminal device joins the multicast session corresponding to the first service. It is to be noted that, in this case, the terminal device has not been handed over to the 4G network, but is likely to be handed over to the 4G network. In this manner, the second notification message may include current access tracking area list information (that is, location information of current access) of the terminal device. When moving out of the tracking area list, the terminal device may send the second notification message again, to send new tracking area list information. Optionally, a tracking area list of the second network currently accessed by the terminal device may be mapped to a tracking area list of the first network, and a tracking area list of the first network is sent in the second notification message. For example, when the second notification message is sent through the NEF network element, the NEF network element may map the tracking area list of the second network to the tracking area list of the first network. Alternatively, the core network element 6 is an SMF+PGW-C, and the SMF+PGW-C may subscribe to a tracking area list change notification from the AMF network element. When the AMF network element sends the tracking area list to the SMF+PGW-C, the mapping may be performed, and the tracking area list of the first network may be sent to the SMF+PGW-C.

In addition, in a possible implementation, the core network element 6 may send the second notification message based on second capability information of the terminal device. The second capability information may indicate whether the terminal device supports a 4G capability (that is, whether access to the 4G network is supported) and/or whether an eMBMS capability is supported (that is, whether receiving of data in the first transmission manner is supported). For example, when the terminal device supports the 4G capability or the terminal device supports the eMBMS capability, the core network element 6 may send the second notification message. For example, the terminal device may send the second capability information to the core network element 6, for example, carry the second capability information of the terminal device in a PDU session establishment message or a PDU session modification message.

S 1004: The MBSF network element or the AS sends information 9 to a core network element 7, where the information 9 is for establishing a transmission path 4 (a transmission path corresponding to a fifth transmission manner), and the transmission path 4 is used to send data of the first service to the terminal device in the fifth transmission manner in the 4G network. For example, the core network element 7 may be an SMF+PGW-C, and the information 9 may be sent to the SMF+PGW-C through the NEF network element and/or the PCF network element, or through the MBSF network element or the MB-SMF network element.

When the data of the first service is sent in the fifth transmission manner, a destination address of a data packet is an IP address of the terminal device, and the transmission path 4 may be: AS → PGW-U network element → SGW → eNB → terminal device.

For example, the AS is used as an example. In a possible implementation, the second notification message may include access location information of the terminal device, and the access location information of the terminal device indicates a location where the terminal device is accessed. For example, the location where the terminal device is accessed includes a cell and/or a tracking area in the 4G network accessed by the terminal device. Correspondingly, the access location information of the terminal device may include information of the cell in the 4G network accessed by the terminal device, and/or a tracking area ID (tracking area ID, TAI) in the 4G network accessed by the terminal device. Further, after receiving the second notification message, the AS may determine, based on the location information, for example, information of a cell, whether the location (for example, the cell) supports sending of the data of the first service in the eMBMS transmission manner (for example, determine whether the cell is in a service area that supports transmission of the first service in the eMBMS transmission manner). If the sending is not supported, the information 9 is sent to the core network element 7; or if the sending is supported, the information 9 may not be sent to the core network element 7. It is to be noted that, if the core network element 7 receives the information 9 before the terminal device is handed over to the 4G network (for example, the second notification message is sent before the handover), the core network element 7 may trigger creation of a QoS flow for the first service. When the terminal device is handed over to the 4G network, the QoS flow is handed over to the transmission path 4. Optionally, when the QoS flow is created, the access network element may be indicated not to allocate a radio resource to the QoS flow, that is, the access network element may store only information about the QoS flow.

For this implementation, it should be noted that, in another possible embodiment, after the AS receives the second notification message, if determining that sending of the data of the first service in the eMBMS transmission manner is not supported at the location where the terminal device is accessed, the AS may also send request information to the BM-SC (that is, the AS does not send the information 9 to the core network element 7, but sends the request information to the BM-SC). The request information is used to request to establish a transmission path 5 (a transmission path corresponding to the first transmission manner), and the transmission path 5 is for sending the data of the first service to the terminal device in the first transmission manner in the 4G network. For example, the AS may send request information to the BM-SC. The request information may include new service area information of the first service, the new service area information of the first service indicates a new service area of the first service, and the new service area of the first service may include a location where the terminal device is accessed. Further, the BM-SC may create an eMBMS bearer for the first service in the new service area, so that the AS sends the data of the first service to the terminal device in the first transmission manner. In other words, the service area that supports transmission of the first service in the eMBMS transmission manner is not fixed. When the location where the terminal device is accessed is not in the service area, the AS may request the BM-SC to create an eMBMS bearer for the first service at the location where the terminal device is accessed. After the eMBMS bearer is created, it may be considered that the service area is updated, and an updated service area includes the new service area of the first service. It is to be noted that, the new service area of the first service includes a location where the terminal device is accessed, which may mean that the new service area of the first service is greater than or equal to the location where the terminal device is accessed, or that the new service area of the first service completely covers the location where the terminal device is accessed.

In another possible implementation, the second subscription request may include information 10, where the information 10 indicates to send the second notification message when sending of the data of the first service in the eMBMS transmission manner is not supported at the location where the terminal device is accessed. Further, after receiving the second notification message, the AS may send the information 9 to the core network element 7. For example, the information 10 may further include information about a service area that supports transmission of the first service in the eMBMS transmission manner, so that the core network element 7 determines whether sending of the data of the first service in the eMBMS transmission manner is supported at the location where the terminal device is accessed.

For this implementation, it should be noted that, in another possible embodiment, after receiving the second notification message, the AS may alternatively send request information to the BM-SC (that is, the AS does not send the information 9 to the core network element 7, but sends the request information to the BM-SC). The request information is used to request to establish a transmission path 5 (a transmission path corresponding to the first transmission manner). For details, refer to the foregoing descriptions.

For example, the information 9 may include service information when the first service is sent in the fifth transmission manner. For example, the service information may include a unicast filtering rule, and the information 9 may further include QoS information when the first service is sent in the fifth transmission manner. The network architecture shown in FIG. 3 is used as an example. The core network element 7 may be a PGW-C+SMF. For example, the MBSF network element or the AS may send service information to the PGW-C+SMF through the NEF network element or the PCF network element. The PCF network element is used as an example. The PCF network element may determine a policy and charging control (policy and charging control, PCC) rule based on the service information, and send the PCC rule to the PGW-C+SMF. The PCC rule includes the unicast filtering rule. Correspondingly, after receiving the PCC rule, the PGW-C+SMF may establish a unicast bearer based on the PCC rule, and send the unicast filtering rule to the PGW-U network element. Further, after the PGW-U network element receives data of the first service from the AS, the data of the first service may be mapped to the unicast bearer based on the unicast filtering rule, and may be sent to the terminal device by using the unicast bearer. For establishing a unicast bearer based on the PCC rule, refer to the description in the conventional technology, and details are not described herein again.

It is to be noted that, when a corresponding unicast bearer has not been established, the data of the first service may be first sent to the terminal device by using a default bearer, to avoid a data loss, but QoS guarantee may not be performed on a small amount of data.

S1005: The AS sends the data of the first service to the terminal device through the transmission path 4, where a destination address of a data packet is an IP address of the terminal device. Correspondingly, the terminal device receives the data of the first service through the transmission path 4.

According to the foregoing method, the AS may learn, based on the notification message of the core network element, that the terminal device accesses the 4G network, and then after a cell accessed by the terminal device does not support sending of the data of the first service in the eMBMS transmission manner, the AS may send the data of the first service to the terminal device through the transmission path corresponding to the fifth transmission manner.

For Embodiment 1 to Embodiment 6, the following needs to be noted.
(1) For any one of the information 1 to the information 10 in Embodiment 1 to Embodiment 6, a message carrying the information may not be limited in embodiments of this application. Alternatively, one (or some) of the information 1 to the information 10 may be a message.
(2) Step numbers in the flowcharts described in Embodiment 1 to Embodiment 6 are merely examples of executing procedures and do not constitute a limitation on an execution sequence of steps, and in embodiments of this application, there is no strict execution sequence between steps that have no time sequence dependency relationship with each other. In addition, not all steps shown in the flowcharts are mandatory steps, and some steps may be added or deleted based on the flowcharts according to an actual requirement.
(3) The foregoing focuses on differences between different embodiments in Embodiment 1 to Embodiment 6, and Embodiment 1 to Embodiment 6 may refer to each other except for other content of the differences. In addition, in a same embodiment, different implementations or different examples may also refer to each other.
(4) Embodiment 1 to Embodiment 6 may be separately implemented, or may be combined. For example, Embodiment 1, Embodiment 2, or Embodiment 3 may be implemented in combination with Embodiment 4. In this case, when the terminal device moves from the 5G network to the 4G network, the solutions in Embodiment 1, Embodiment 2, or Embodiment 3 may be adopted; and when the terminal device moves from the 4G network to the 5G network, the solutions in Embodiment 4 may be adopted. In another example, Embodiment 5 may be implemented in combination with Embodiment 6. In this case, when the terminal device moves from the 5G network to the 4G network, the solution in Embodiment 6 may be used. When the terminal device moves from the 4G network to the 5G network, the solution in Embodiment 5 may be used. In addition, in this case, the first subscription request and the second subscription request may be carried in a same message or different messages. This is not specifically limited.

The solutions provided in embodiments of this application are mainly described above from a perspective of device interaction. It may be understood that, to implement the foregoing functions, the core network element, the access network element, the terminal device, or the application server may include corresponding hardware structures and/or software modules for performing the function. A person skilled in the art should be easily aware that, in combination with the units and algorithm steps of the examples described in embodiments disclosed in this specification, embodiments of this application can be implemented by hardware or a combination of hardware and computer software. Whether a function is performed by hardware or hardware driven by computer software depends on particular applications and design constraints of the technical solutions. A person skilled in the art may use different methods to implement the described functions of each particular application, but it should not be considered that the implementation goes beyond the scope of this application.

In embodiments of this application, functional unit division may be performed on the core network element, the access network element, the terminal device, or the application server based on the foregoing method examples. For example, the functional units may be divided based on corresponding functions, or two or more functions may be integrated into one unit. The integrated unit may be implemented in a form of hardware, or may be implemented in a form of a software function unit.

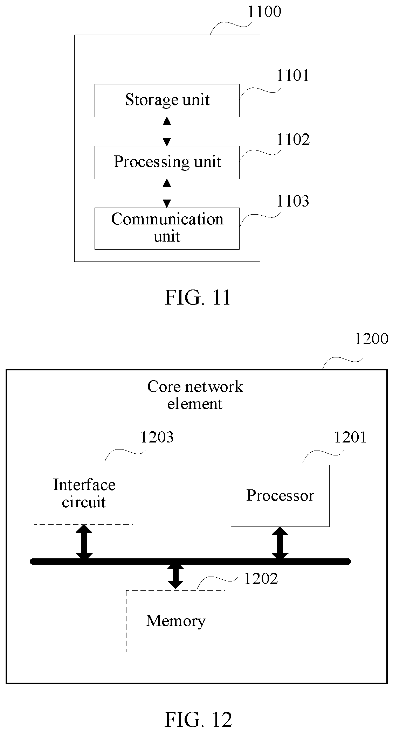

When an integrated unit is used, FIG. 11 shows a possible example block diagram of an apparatus according to an embodiment of this application. As shown in FIG. 11, an apparatus 1100 may include: a processing unit 1102 and a communication unit 1103. The processing unit 1102 is configured to control and manage an action of the apparatus 1100. The communication unit 1103 is configured to support communication between the apparatus 1100 and another device. Optionally, the communication unit 1103 is also referred to as a transceiver unit, and may include a receiving unit and/or a sending unit respectively configured to perform a receiving operation and a sending operation. Optionally, the apparatus 1100 may further include a storage unit 1101, configured to store program code and/or data of the apparatus 1100.

For example, the apparatus 1100 may be the core network element in the foregoing embodiments, or may be a chip disposed in the core network element. The processing unit 1102 may support the apparatus 1100 in performing actions of the core network element in the foregoing method examples. Alternatively, the processing unit 1102 mainly performs an internal action of the core network element in the method examples, and the communication unit 1103 may support communication between the apparatus 1100 and another device.

Specifically, in an embodiment, the processing unit 1102 is configured to obtain service area information of a first service, where the service area information indicates a service area that supports transmission of the first service in a first transmission manner in the first network; and the communication unit 1103 is configured to send first information if a target cell of the terminal device is not in the service area, where the first information is for establishing a first transmission path, and the first transmission path is for sending data of the first service to the terminal device in a second transmission manner in the first network; or skip sending first information if a target cell is in the service area, where the target cell is in the first network.

In a possible design, the service area information includes at least one of the following: an identifier of a PLMN corresponding to the service area; a TAI corresponding to the service area; and an identifier of a cell corresponding to the service area.

In a possible design, the apparatus 1100 may be a session management network element or a chip disposed in a session management network element.

In a possible design, the communication unit 1103 is further configured to: receive the service area information from a first core network element, where the first core network element includes any one of the following: a multi-cast service network element, a multi-cast session management network element, a network exposure function network element, a policy control network element, a unified data storage network element, and a unified data management network element; or receive the service area information from the terminal device.

In a possible design, the communication unit 1103 is specifically configured to: receive a first message from the terminal device, where the first message includes the service area information, and the first message is a PDU session establishment request message or a PDU session modification request message.

In a possible design, the first message further includes a join request, and the join request is used to request to send the data of the first service to the terminal device in a third transmission manner in the second network.

In a possible design, the processing unit 1102 is further configured to: obtain information about the target cell; and determine, based on the information about the target cell, whether the target cell is in the service area.

In a possible design, the information about the target cell includes a TAI corresponding to the target cell and/or an identifier of the target cell.

In a possible design, the communication unit 1103 is further configured to: receive the information about the target cell from a mobility management network element.

In a possible design, the information about the target cell is carried in a session context request message from the mobility management network element, the session context request message is used to request a context of a first PDU session of the terminal device, and the first PDU session is associated with the first service.

In a possible design, the processing unit 1102 is further configured to: determine, if the session context request message does not carry the information about the target cell, that the target cell is not in the service area.

In a possible design, the communication unit 1103 is further configured to: receive the session context request message from the mobility management network element, where the session context request message is used to request the context of the first PDU session of the terminal device, and the first PDU session is associated with the first service; and send the context of the first PDU session to the mobility management network element based on the session context request message, where the context of the first PDU session includes the first information.

In a possible design, the communication unit 1103 is further configured to: receive the session context request message from the mobility management network element, where the session context request message is used to request the context of the first PDU session of the terminal device, and the first PDU session is associated with the first service; and send the context of the first PDU session to the mobility management network element based on the session context request message, where the context of the first PDU session does not include the first information.

In a possible design, if the target cell of the terminal device is in the service area, the processing unit 1102 is further configured to: release a resource that is in the second network and that is for sending the first service to the terminal device.

In a possible design, the apparatus 1100 may be a mobility management network element or a chip disposed in a mobility management network element.

In a possible design, the communication unit 1103 is further configured to: receive the service area information from a second core network element, where the second core network element includes any one of the following: a session management network element, a multi-cast service network element, a multi-cast session management network element, a network exposure function network element, a unified data storage network element, or a unified data management network element.

In a possible design, the processing unit 1102 is further configured to: obtain information about the target cell; and determine, based on the information about the target cell, whether the target cell is in the service area.

In a possible design, the information about the target cell includes a TAI corresponding to the target cell and/or an identifier of the target cell.

In a possible design, the communication unit 1103 is further configured to: receive the information about the target cell from a source access network element of the terminal device, where the source access network element is in the second network.

In a possible design, the communication unit 1103 is further configured to: receive the first information from the session management network element.

In a possible design, the communication unit 1103 is further configured to: send a second message to the session management network element, where the second message is for obtaining the first information.

In a possible design, the second message includes second information, and the second information indicates to send the data of the first service to the terminal device in the second transmission manner in the first network.

In a possible design, the second message is a session context request message, where the session context request message is used to request a context of a first PDU session of the terminal device, and the first PDU session is associated with the first service.

In a possible design, the processing unit 1102 is further configured to: determine the first PDU session associated with the first service.

In a possible design, the processing unit 1102 is specifically configured to: determine, based on S-NSSAI and/or a DNN of the first service, that a PDU session corresponding to the S-NSSAI and/or the DNN is the first PDU session associated with the first service; or receive an identifier of the first service from the session management network element by using the first PDU session, and establish an association relationship between the first service and the first PDU session; and determine, based on the association relationship, the first PDU session associated with the first service.

In a possible design, if the target cell is in the service area, the communication unit 1103 is further configured to: send third information to a source access network element of the terminal device, where the third information is used to redirect the terminal device to the target cell, and the source access network element is in the second network.

In another example, the apparatus 1100 may be the access network element in the foregoing embodiments, or may be a chip disposed in the access network element. The processing unit 1102 may support the apparatus 1100 in performing actions of the access network element in the foregoing method examples. Alternatively, the processing unit 1102 mainly performs an internal action of the access network element in the method examples, and the communication unit 1103 may support communication between the apparatus 1100 and another device.

Specifically, in an embodiment, the processing unit 1102 is configured to obtain service area information of a first service, where the service area information indicates a service area that supports transmission of the first service in a first transmission manner in the first network; and the communication unit 1103 is configured to send fourth information if a target cell of the terminal device is not in the service area, where the fourth information indicates to allocate a radio resource to the first service in the first network, and the radio resource is used to send data of the first service to the terminal device in a second transmission manner in the first network; or if the target cell is in the service area, redirect the terminal device to the target cell, or send fifth information, where the fifth information indicates not to allocate the radio resource to the first service in the first network, where the target cell is in the first network.

In another example, the apparatus 1100 may be the terminal device in the foregoing embodiments, or may be a chip disposed in the terminal device. The processing unit 1102 may support the apparatus 1100 in performing actions of the terminal device in the foregoing method examples. Alternatively, the processing unit 1102 mainly performs an internal action of the terminal device in the method examples, and the communication unit 1103 may support communication between the apparatus 1100 and another device.

Specifically, in an embodiment, the processing unit 1102 is configured to obtain sixth information, where the sixth information indicates a second network to support sending of data of a first service in a third transmission manner; and the communication unit 1103 is configured to send a join request to a network element in the second network based on the sixth information, where the join request is used to request to send the data of the first service to a terminal device in the third transmission manner in the second network.

In another example, the apparatus 1100 may be the application server in the foregoing embodiment, or may be a chip disposed in the application server. The processing unit 1102 may support the apparatus 1100 in performing actions of the application server in the foregoing method examples. Alternatively, the processing unit 1102 mainly performs an internal action of the application server in the method examples, and the communication unit 1103 may support communication between the apparatus 1100 and another device.

Specifically, in an embodiment, the communication unit 1103 is configured to: receive a first notification message, where the first notification message notifies a terminal device to access a second network, where the second network supports sending data of a first service in a third transmission manner; and send seventh information based on the first notification message, where the seventh information indicates to send the data of the first service to the terminal device in the third transmission manner in the second network.

In still another embodiment, the communication unit 1103 is configured to: receive a second notification message, where the second notification message indicates the terminal device to access a first network; and send eighth information based on the second notification message, where the eighth information is for establishing a second transmission path, and the second transmission path is for sending data of a first service to the terminal device in a fifth transmission manner in the first network; or send request information based on the second notification message, where the request information requests to establish a third transmission path, and the third transmission path is for sending the data of the first service to the terminal device in a first transmission manner in the first network.

It should be further understood that division of units in the apparatus is merely logical function division. During actual implementation, all or some of the units may be integrated into one physical entity or may be physically separated. All units in the apparatus may be implemented in a form of software invoked by a processing element, or may be implemented in a form of hardware. Alternatively, some units may be implemented in a form of software invoked by a processing element, and some units may be implemented in a form of hardware. For example, each unit may be a separately arranged processing element, or may be integrated into a chip of the apparatus for implementation. In addition, each unit may be stored in a memory in a form of a program, and a function of the unit is invoked by a processing element of the apparatus to execute the unit. In addition, all or some of these units may be integrated, or may be independently implemented. The processing element described herein may also be a processor, and may be an integrated circuit having a signal processing capability. During implementation, operations in the foregoing methods or the foregoing units may be implemented by using a hardware integrated logic circuit in a processor element, or may be implemented in a form of software invoked by the processing element.

In an example, a unit in any one of the foregoing apparatuses may be one or more integrated circuits configured to implement the foregoing method, for example, one or more application specific integrated circuits (application specific integrated circuits, ASICs), one or more microprocessors (microprocessors), one or more field programmable gate arrays (field programmable gate arrays, FPGAs), or a combination of at least two of these integrated circuit forms. In another example, when a unit in the apparatus may be implemented in a form of scheduling a program by a processing element, the processing element may be a processor, for example, a general-purpose central processing unit (central processing unit, CPU), or another processor that can invoke a program. In another example, these units may be integrated and implemented in a form of a system-on-a-chip (system-on-a-chip, SOC).

The foregoing unit for receiving is an interface circuit of the apparatus, and is configured to receive a signal from another apparatus. For example, when the apparatus is implemented in a chip manner, the receiving unit is an interface circuit used by the chip to receive a signal from another chip or apparatus. The foregoing unit for sending is an interface circuit of the apparatus, and is configured to send a signal to another apparatus. For example, when the apparatus is implemented in a chip manner, the sending unit is an interface circuit used by the chip to send a signal to another chip or apparatus.

FIG. 12 is a schematic diagram of a structure of a core network element according to an embodiment of this application. The core network element may be the session management network element (for example, the PGW-C+SMF) or the mobility management network element (for example, the AMF network element) in the foregoing embodiments, and is configured to implement an operation of the session management network element or the mobility management network element in the foregoing embodiments.

As shown in FIG. 12, a core network element 1200 may include a processor 1201, a memory 1202, and an interface circuit 1203. The processor 1201 may be configured to process a communication protocol and communication data, and control a communication apparatus. The memory 1202 may be configured to store a program and data. The processor 1201 may perform, based on the program, the method performed by the core network element in embodiments of this application. The interface circuit 1203 may be used by the core network element 1200 to communicate with another device. The communication may be wired communication or wireless communication. The interface circuit may be, for example, a service-based communication interface.

Alternatively, the memory 1202 may be externally connected to the core network element 1200. In this case, the core network element 1200 may include an interface circuit 1203 and a processor 1201. Alternatively, the interface circuit 1203 may be externally connected to the core network element 1200. In this case, the core network element 1200 may include a memory 1202 and a processor 1201. When both the interface circuit 1203 and the memory 1202 are externally connected to the core network element 1200, the communication apparatus 1200 may include a processor 1201.

The core network element shown in FIG. 12 can implement processes related to the core network element in the foregoing method embodiments. Operations and/or functions of modules in the core network element shown in FIG. 12 are separately used to implement corresponding procedures in the method embodiments. For details, refer to the descriptions in the method embodiment. To avoid repetitions, and detailed description is appropriately omitted herein.

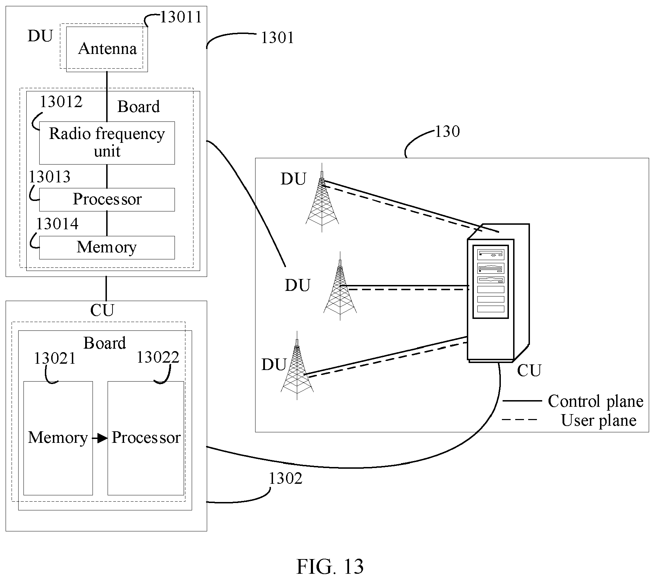

FIG. 13 is a schematic diagram of a structure of an access network element according to an embodiment of this application. The access network element (for example, a source access network element) is configured to perform a function of the access network element in the method embodiments. An access network element 130 may include one or more distributed units (distributed units, DUs) 1301 and one or more centralized units (centralized units, CUs) 1302. The DU 1301 may include at least one antenna 13011, at least one radio frequency unit 13012, at least one processor 13013, and at least one memory 13014. The DU 1301 part is mainly configured to: receive and send a radio frequency signal, perform conversion between a radio frequency signal and a baseband signal, and perform some baseband processing. The CU 1302 may include at least one processor 13022 and at least one memory 13021.

The CU 1302 is mainly configured to perform baseband processing, control the access network element, and the like. The DU 1301 and the CU 1302 may be physically arranged together, or may be physically arranged separately, that is, a distributed base station. The CU 1302 is a control center of the access network element, may also be referred to as a processing unit, and is mainly configured to complete a baseband processing function. For example, the CU 1302 may be configured to control the access network element to perform an operation procedure of the access network element in the method embodiments.

In addition, optionally, the access network element 130 may include one or more radio frequency units, one or more DUs, and one or more CUs. The DU may include at least one processor 13013 and at least one memory 13014, the radio frequency unit may include at least one antenna 13011 and at least one radio frequency unit 13012, and the CU may include at least one processor 13022 and at least one memory 13021.

In an example, the CU 1302 may include one or more boards, and a plurality of boards may jointly support a radio access network (for example, a 5G network) with a single access indication, or may separately support radio access networks (for example, an LTE network, a 5G network, or another network) of different access standards. The memory 13021 and the processor 13022 may serve one or more boards. In other words, a memory and a processor may be independently arranged on each board. Alternatively, a plurality of boards may share a same memory and a same processor. In addition, necessary circuits may be arranged on each board. The DU 1301 may include one or more boards, and a plurality of boards may jointly support a radio access network (for example, a 5G network) with a single access indication, or may separately support radio access networks (for example, an LTE network, a 5G network, or another network) of different access standards. The memory 13014 and the processor 13013 may serve one or more boards. In other words, a memory and a processor may be independently arranged on each board. Alternatively, a plurality of boards may share a same memory and a same processor. In addition, necessary circuits may be arranged on each board.

The access network element shown in FIG. 13 can implement processes related to the access network element in the foregoing method embodiments. Operations and/or functions of modules in the access network element shown in FIG. 13 are separately used to implement corresponding procedures in the method embodiments. For details, refer to the descriptions in the method embodiment. To avoid repetitions, and detailed description is appropriately omitted herein.

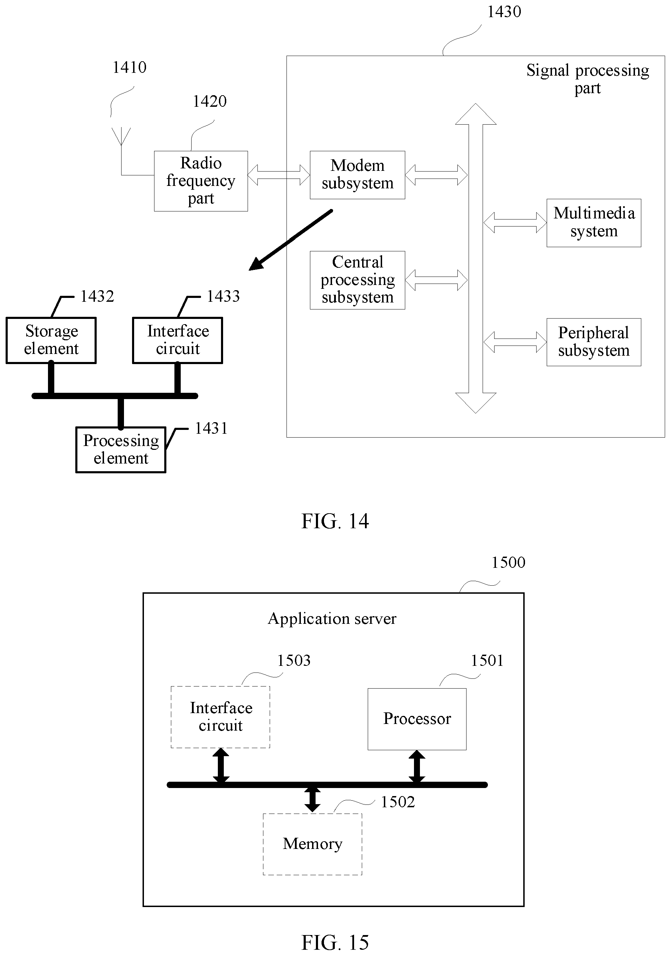

FIG. 14 is a schematic diagram of a structure of a terminal device according to an embodiment of this application. The terminal device is configured to implement operations of the terminal device in the foregoing embodiments. As shown in FIG. 14, the terminal device includes: an antenna 1410, a radio frequency part 1420, and a signal processing part 1430. The antenna 1410 is connected to the radio frequency part 1420. In a downlink direction, the radio frequency part 1420 receives, by using the antenna 1410, information sent by the network device, and sends the information sent by the network device to the signal processing part 1430 for processing. In an uplink direction, the signal processing part 1430 processes the information about the terminal device, and sends the information to the radio frequency part 1420. The radio frequency part 1420 processes the information about the terminal device, and then sends the information to the network device by using the antenna 1410.

The signal processing part 1430 may include a modem subsystem, configured to implement processing on each communication protocol layer of data; and may further include a central processing subsystem, configured to implement processing on an operating system and an application layer of the terminal device. In addition, other subsystems may be further included, for example, a multimedia subsystem and a peripheral subsystem. The multimedia subsystem is configured to control a camera and screen display of a terminal device, and the peripheral subsystem is configured to connect to another device. The modem subsystem may be an independently configured chip.

The modem subsystem may include one or more processing elements 1431, for example, include a main control CPU and another integrated circuit. In addition, the modem subsystem may further include a storage element 1432 and an interface circuit 1433. The storage element 1432 is configured to store data and a program. However, a program configured to perform the methods performed by the terminal device in the foregoing methods may not be stored in the storage element 1432, but is stored in a memory outside the modem subsystem, and is loaded and used by the modem subsystem during use. The interface circuit 1433 is configured to communicate with another subsystem.

The modem subsystem may be implemented by using a chip. The chip includes at least one processing element and an interface circuit. The processing element is configured to perform steps of any method performed by the terminal device. The interface circuit is configured to communicate with another apparatus. In an implementation, a unit used by the terminal device to implement the steps in the foregoing methods may be implemented in a form of scheduling a program by a processing element. For example, an apparatus used for the terminal device includes a processing element and a storage element, and the processing element invokes a program stored in the storage element, to perform the method performed by the terminal device in the foregoing method embodiment. The storage element may be a storage element on a same chip as the processing element, that is, an on-chip storage element.

In another implementation, a program used to perform the method executed by the terminal device in the foregoing methods may be on a storage element that is located on a different chip from the processing element, that is, an off-chip storage element. In this case, the processing element invokes or loads a program to the on-chip storage element from the off-chip storage element, to invoke and perform the method executed by the terminal device in the foregoing method embodiment.

In still another implementation, units used by the terminal device to implement the steps in the foregoing methods may be configured as one or more processing elements. These processing elements are disposed in a modem subsystem. The processing elements herein may be an integrated circuit, for example, one or more ASICs, one or more DSPs, one or more FPGAs, or a combination of these integrated circuits. These integrated circuits can be integrated together to form a chip.

Units used by the terminal device to implement the steps in the foregoing methods may be integrated and implemented in a form of an SOC. The SOC chip is configured to implement the foregoing methods. At least one processing element and a storage element may be integrated in the chip, and the processing element invokes a program stored in the storage element to implement the method executed by the terminal device. Alternatively, at least one integrated circuit may be integrated into the chip, and is configured to implement the method performed by the foregoing terminal device. Alternatively, with reference to the foregoing implementations, functions of some units are implemented in a form of a program invoked by a processing element, and functions of some units are implemented in a form of an integrated circuit.

It can be learned that the foregoing apparatus for a terminal device may include at least one processing element and an interface circuit, where the at least one processing element is configured to perform the method performed by any terminal device provided in the foregoing method embodiments. The processing element may be in a first manner: To be specific, a part or all of the steps performed by the terminal device are executed in a manner of invoking a program stored in the storage element. Alternatively, in a second manner: To be specific, some or all of the steps performed by the terminal device are executed by using an integrated logic circuit of hardware in the processor element in combination with an instruction. Certainly, some or all of the steps performed by the terminal device may also be performed with reference to the first manner and the second manner.

The processing element herein is the same as that described above, and may be implemented by using a processor. A function of the processing element may be the same as a function of the processing unit described in FIG. 11. For example, the processing element may be a general purpose processor, for example, a CPU, or may be one or more integrated circuits configured to implement the foregoing method, for example, one or more ASICs, one or more microprocessors DSPs, one or more FPGAs, or a combination of at least two of these integrated circuit forms. The storage element may be implemented by using a memory, and a function of the storage element may be the same as a function of the storage unit described in FIG. 11. The storage element may be a memory, or may be a collective name of a plurality of memories.

The terminal device shown in FIG. 14 can implement processes related to the terminal device in the foregoing method embodiments. Operations and/or functions of modules in the terminal device shown in FIG. 14 are separately used to implement corresponding procedures in the method embodiments. For details, refer to the descriptions in the method embodiment. To avoid repetitions, and detailed description is appropriately omitted herein.

FIG. 15 is a schematic diagram of a structure of an application server according to an embodiment of this application. The application server is configured to implement operations of the application server in the foregoing embodiments.

As shown in FIG. 15, an application server 1500 may include a processor 1501, a memory 1502, and an interface circuit 1503. The processor 1501 may be configured to process a communication protocol and communication data, and control a communication apparatus. The memory 1502 may be configured to store a program and data. The processor 1501 may perform, based on the program, the method performed by the application server in embodiments of this application. The interface circuit 1503 may be used by the application server 1500 to communicate with another device. The communication may be wired communication or wireless communication. The interface circuit may be, for example, a service-based communication interface.

Alternatively, the memory 1502 may be externally connected to the application server 1500. In this case, the application server 1500 may include an interface circuit 1503 and a processor 1501. Alternatively, the interface circuit 1503 may be externally connected to the application server 1500. In this case, the application server 1500 may include a memory 1502 and a processor 1501. When both the interface circuit 1503 and the memory 1502 are externally connected to the application server 1500, the communication apparatus 1500 may include a processor 1501.

The application server shown in FIG. 15 can implement processes related to the application server in the method embodiments. Operations and/or functions of modules in the application server shown in FIG. 15 are separately used to implement corresponding procedures in the method embodiments. For details, refer to the descriptions in the method embodiment. To avoid repetitions, and detailed description is appropriately omitted herein.

The terms "system" and "network" in embodiments of this application may be used interchangeably. "At least one" means one or more, and "a plurality of" means two or more. The term "and/or" is an association relationship for describing associated objects and represents that three relationships may exist. For example, A and/or B may represent the following three cases: Only A exists, both A and B exist, and B only exists, where A and B may be singular or plural. The character "/" generally indicates an "or" relationship between the associated objects. At least one of the following items (pieces) or a similar expression thereof refers to any combination of these items, including any combination of singular items (pieces) or plural items (pieces). For example, "at least one of A, B, and C" includes A, B, C, AB, AC, BC, or ABC. Unless otherwise described, ordinal terms such as "first" and "second" described in embodiments of this application are intended to distinguish a plurality of objects, and are not intended to limit an order, a time sequence, priorities, or importance degrees of the plurality of objects.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, an optical memory, and the like) that include computer usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or the processor of another programmable data processing device generate an apparatus for implementing a specific function in one or more processes in the flowcharts and/or in one or more blocks in the block diagrams.

These computer program instructions may be stored in a computer-readable memory that can instruct the computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operation steps are performed on the computer or another programmable device, thereby generating computer-implemented processing. Therefore, the instructions executed on the computer or another programmable device provide steps for implementing a specific function in one or more processes in the flowcharts and/or in one or more blocks in the block diagrams.

It is clear that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A communication method, wherein the method is applied to a first communication apparatus, the method is applied in a scenario that a terminal device moves from a second network to a first network, and the method comprises:
obtaining service area information of a first service, wherein the service area information indicates a service area that supports transmission of the first service in a first transmission manner in the first network; and
sending first information if a target cell of the terminal device is not in the service area, wherein the first information is for establishing a first transmission path, and the first transmission path is for sending data of the first service to the terminal device in a second transmission manner in the first network; or
skipping sending first information if a target cell is in the service area;
wherein the target cell is in the first network.

2. The method according to claim 1, wherein the service area information comprises at least one of the following:
an identifier of a public land mobile network PLMN corresponding to the service area;
a tracking area identifier TAI corresponding to the service area; and
an identifier of a cell corresponding to the service area.

3. The method according to claim 1 or 2, wherein the first communication apparatus is a session management network element or a chip disposed in a session management network element.

4. The method according to claim 3, wherein the obtaining service area information of a first service comprises:
receiving the service area information from a first core network element, wherein the first core network element comprises any one of the following: a multi-cast service network element, a multi-cast session management network element, a network exposure function network element, a policy control network element, a unified data storage network element, and a unified data management network element; or
receiving the service area information from the terminal device.

5. The method according to claim 4, wherein the receiving the service area information from the terminal device comprises:
receiving a first message from the terminal device, wherein the first message comprises the service area information, and the first message is a protocol data unit PDU session establishment request message or a PDU session modification request message.

6. The method according to claim 5, wherein the first message further comprises a join request, and the join request is used to request to send the data of the first service to the terminal device in a third transmission manner in the second network.

7. The method according to any one of claims 3 to 6, wherein the method further comprises:
obtaining information about the target cell; and
determining, based on the information about the target cell, whether the target cell is in the service area.

8. The method according to claim 7, wherein the information about the target cell comprises a TAI corresponding to the target cell and/or an identifier of the target cell.

9. The method according to claim 7 or 8, wherein the obtaining information about the target cell comprises:
receiving the information about the target cell from a mobility management network element.

10. The method according to claim 9, wherein the information about the target cell is carried in a session context request message from the mobility management network element, the session context request message is used to request a context of a first PDU session of the terminal device, and the first PDU session is associated with the first service.

11. The method according to claim 10, wherein the method further comprises:
determining, if the session context request message does not carry the information about the target cell, that the target cell is not in the service area.

12. The method according to any one of claims 3 to 11, wherein the sending first information comprises:
receiving the session context request message from the mobility management network element, wherein the session context request message is used to request the context of the first PDU session of the terminal device, and the first PDU session is associated with the first service; and
sending the context of the first PDU session to the mobility management network element based on the session context request message, wherein the context of the first PDU session comprises the first information.

13. The method according to any one of claims 3 to 11, wherein the skipping sending first information comprises:
receiving the session context request message from the mobility management network element, wherein the session context request message is used to request the context of the first PDU session of the terminal device, and the first PDU session is associated with the first service; and
sending the context of the first PDU session to the mobility management network element based on the session context request message, wherein the context of the first PDU session does not comprise the first information.

14. The method according to any one of claims 3 to 12, wherein if the target cell of the terminal device is in the service area, the method further comprises:
releasing a resource that is in the second network and that is for sending the first service to the terminal device.

15. The method according to claim 1 or 2, wherein the first communication apparatus is a mobility management network element or a chip disposed in a mobility management network element.

16. The method according to claim 15, wherein the obtaining service area information of a first service comprises:
receiving the service area information from a second core network element, wherein the second core network element comprises any one of the following: a session management network element, a multi-cast service network element, a multi-cast session management network element, a network exposure function network element, a unified data storage network element, and a unified data management network element.

17. The method according to claim 15 or 16, wherein the method further comprises:
receiving the first information from the session management network element.

18. The method according to claim 17, wherein the method further comprises:
sending a second message to the session management network element, wherein the second message is for obtaining the first information.

19. The method according to claim 18, wherein the second message comprises second information, and the second information indicates to send the data of the first service to the terminal device in the second transmission manner in the first network.

20. The method according to claim 18 or 19, wherein the second message is a session context request message, wherein the session context request message is used to request a context of a first PDU session of the terminal device, and the first PDU session is associated with the first service.

21. The method according to claim 20, wherein the method further comprises:
determining the first PDU session associated with the first service.

22. The method according to claim 21, wherein the determining the first PDU session associated with the first service comprises:
determining, based on single network slice selection assistance information S-NSSAI and/or a data network name DNN of the first service, that a PDU session corresponding to the S-NSSAI and/or the DNN is the first PDU session associated with the first service; or
receiving an identifier of the first service from the session management network element by using the first PDU session, and establishing an association relationship between the first service and the first PDU session; and determining, based on the association relationship, the first PDU session associated with the first service.

23. The method according to any one of claims 15 to 22, wherein if the target cell is in the service area, the method further comprises:
sending third information to a source access network element of the terminal device, wherein the third information is used to redirect the terminal device to the target cell, and the source access network element is in the second network.

24. A communication method, wherein the method is applicable to a second communication apparatus, and the method comprises:
obtaining sixth information, wherein the sixth information indicates a second network to support sending of data of a first service in a third transmission manner; and
sending a join request to a network element in the second network based on the sixth information, wherein the join request is used to request to send the data of the first service to a terminal device in the third transmission manner in the second network.

25. The method according to claim 24, wherein the sixth information comprises identifiers of one or more networks, the one or more networks comprise the second network, and the one or more networks support sending of the data of the first service in the third transmission manner.

26. The method according to claim 25, wherein the identifiers of the one or more networks are identifiers of one or more PLMNs.

27. The method according to claim 25 or 26, wherein the sixth information further comprises a DNN and/or S-NSSAI corresponding to the second network.

28. The method according to claim 27, wherein the method further comprises:
sending the join request to the network element in the second network by using a first PDU session of the terminal device, wherein a DNN and/or S-NSSAI corresponding to the first PDU session are/is the same as the DNN and/or the S-NSSAI corresponding to the second network.

29. The method according to any one of claims 24 to 28, wherein the obtaining sixth information of a first service of the terminal device comprises:
receiving the sixth information from an application server; or
receiving the sixth information from a multi-cast service network element.

30. A communication apparatus, comprising a module configured to perform the method according to any one of claims 1 to 23.

31. A communication apparatus, comprising a module configured to perform the method according to any one of claims 24 to 29.

32. A communication apparatus, comprising a processor, wherein the processor is coupled to a memory, and the memory stores a computer program; and the processor is configured to invoke a computer program in the memory, to enable the communication apparatus to perform the method according to any one of claims 1 to 23.

33. A communication apparatus, comprising a processor, wherein the processor is coupled to a memory, and the memory stores a computer program; and the processor is configured to invoke a computer program in the memory, to enable the communication apparatus to perform the method according to any one of claims 24 to 29.

34. A computer-readable storage medium, wherein the storage medium stores a computer program or instructions, the computer program or instructions, when executed by a computer, implementing the method according to any one of claims 1 to 23 or the method according to any one of claims 24 to 29.

35. A computer program product, wherein when a computer reads and executes the computer program product, the computer is enabled to perform the method according to any one of claims 1 to 23 or the method according to any one of claims 24 to 29.
